Europäisches Patentamt

European Patent Office

Office européen des brevets

(11) Veröffentlichungsnummer: **0 307 583 B1**

# (12) EUROPÄISCHE PATENTSCHRIFT

(45) Veröffentlichungstag der Patentschrift: **01.04.92**

(51) Int. Cl.⁵: **G01N 27/30**

(21) Anmeldenummer: **88111736.0**

(22) Anmeldetag: **21.07.88**

(54) **Ionenselektiver Teil von Vorrichtungen zur Bestimmung der Ionenkonzentrationen und Verfahren zur Herstellung von hydrophile Gruppen aufweisenden Polymermaterialien.**

(30) Priorität: **04.09.87 CH 3403/87**

(43) Veröffentlichungstag der Anmeldung:
**22.03.89 Patentblatt 89/12**

(45) Bekanntmachung des Hinweises auf die
Patenterteilung:
**01.04.92 Patentblatt 92/14**

(84) Benannte Vertragsstaaten:
**AT BE CH DE ES FR GB IT LI LU NL SE**

(56) Entgegenhaltungen:
**EP-A- 0 185 267**
**EP-A- 0 219 742**

**PATENT ABSTRACTS OF JAPAN, Band 9, Nr. 299 (P-408)[2022], 27. November 1985;& JP-A-60-135 854**

**PATENT ABSTRACTS OF JAPAN, Band 11, Nr. 22 (P-538)[2469], 21. Juni 1987;& JP-A-61-196 157**

**CHEMICAL ABSTRACTS, Band 90, 29. Januar 1979, Seiten 45,46, Nr. 169601r, Columbus, Ohio, US;& JP-A-79-11 994**

**CHEMICAL ABSTRACTS, Band 89, 27. Dezember 1977, Seite 35, Nr. 148730w, Columbus, Ohio, US;& JP-A-77-156 779**

(73) Patentinhaber: **Willi Möller AG**
**Gubelstrasse 37**
**CH-8050 Zürich(CH)**

(72) Erfinder: **Wilhelm, Simon, Prof.Dr.**
**Hadlaubstrasse 63**
**CH-8006 Zuerich(CH)**
Erfinder: **Duerselen, Lucas F.J.**
**Saizig 7**
**W-7895 Klettgau-Erzingen(DE)**

(74) Vertreter: **Blum, Rudolf Emil Ernst et al**
**c/o E. Blum & Co Patentanwälte Vorderberg 11**
**CH-8044 Zürich(CH)**

## Beschreibung

HINTERGRUND DER ERFINDUNG

Die vorliegende Erfindung betrifft einen ionenselektiven Teil von Vorrichtungen zur Bestimmung der Konzentration von Ionen in flüssigen Medien, der ein Polymermaterial, eine ionenselektive Komponente, welche eine Selektivität gegenüber dem zu bestimmenden Ion aufweist und gegebenenfalls Weichmacher enthält. Entsprechende Vorrichtungen zur Bestimmung von Ionenkonzentrationen werden in vielen Bereichen eingesetzt, das Polymermaterial des ionenselektiven Teiles ist meist Polyvinylchlorid und es sind eine grosse Anzahl an verwendbaren Weichmachern und ionenselektiven Komponenten in der Literatur beschrieben. Wenn entsprechende Vorrichtungen zur Bestimmung der Ionen in wässrigen Medien eingesetzt werden, die frei von relativ hochmolekularen organischen Stoffen sind, dann erhält man genaue und gut reproduzierbare Messergebnisse. Werden jedoch die Ionenkonzentrationen in flüssigen Medien bestimmt, die hochmolekulare organische Stoffe mit hydrophilen Gruppen enthalten, beispielsweise Proteine, dann ist die Reproduzierbarkeit oft schlecht, weil sich das Standardpotential nach dem Kontakt des ionenselektiven Teiles mit den hochmolekularen Stoffen ändert und ein Asymmetriepotential entsteht.

Ziel der vorliegenden Erfindung war es, die Polymerkomponente entsprechender ionenselektiver Teile so zu modifizieren, dass die erwähnten Nachteile beseitigt werden, sodass entsprechende Vorrichtungen auch nach der Bestimmung von Ionenkonzentrationen in biologischem Material, beispielsweise Körperflüssigkeiten wie Blutserum und Gesamtblut, eine gute Konstanz des Standardpotentials und ein geringeres oder überhaupt kein Asymmetriepotential aufweisen.

BESCHREIBUNG DES STANDES DER TECHNIK

Ionenselektive Membranen werden in verschiedensten Bereichen zur Bestimmung der Konzentration von Ionen eingesetzt.

Eine Zusammenfassung von entsprechenden Vorrichtungen, die für die klinische Anwendung geeignet sind, wird in der Veröffentlichung von U. Oesch, D. Ammann und W. Simon, Clinical Chemistry, Vol. 32, Nr. 8, 1986, Seiten 1448 - 1459, gegeben und dort wird auch der Aufbau von entsprechenden Vorrichtungen zur klinischen Anwendung, wie Durchflusselektroden, Katheterelektroden, ionenselektiven Feldeffekttransistoren und Slides zur potentiometrischen Analyse erläutert. Es wird darauf hingewiesen, dass bereits viele Polymermaterialien in Kombination mit Weichmachern zur Herstellung von ionenselektiven Teilen eingesetzt wurden, dass jedoch Polyvinylchlorid die bei weitem am häufigsten verwendete Polymerkomponente ist. Die Anforderungen, die an ionenselektive Elektroden zur Bestimmung von Kationen und Anionen im Gesamtblut, Blutplasma und Serum bezüglich der Selektivität gegenüber den entsprechenden Ionen gestellt werden müssen, werden erläutert, und in dieser Veröffentlichung aus dem Jahre 1986 wird auf Seite 1450, rechte Spalte, Zeilen 17 - 26, hervorgehoben, dass bei der klinischen Anwendung weitere Eigenschaften der ionenselektiven Teile wie Stabilität und Lebensdauer oft zu einem Versagen führen. Die Stabilität ist häufig durch eine Aenderung des Standardpotentials (ein Shiften des Wertes $E_0$) und durch eine schlechte Reproduzierbarkeit nicht gewährleistet.

Dort wurde bereits erkannt, dass die Aenderung des Standardpotentials auch zu beobachten ist, sobald der ionenselektive Teil erstmals mit einer Protein enthaltenden Lösung in Berührung gekommen ist.

Es wurde auch bereits versucht, dieses Problem zu lösen, indem man erneute Eichungen mit wässrigen Systemen vornahm, nachdem die Membran mit einer proteinhaltigen Lösung in Berührung gekommen war. Es sei in diesem Zusammenhang auf die Veröffentlichung von N. Fogh-Andersen, T.F. Christiansen, L. Komarny und O. Siggaard-Andersen in Clin. Chem. 1978, 24, 1515, verwiesen.

Da aber das Shiften des Standardpotentials $E_0$ weder konstant noch probenunabhängig ist, führte auch die sehr arbeitsaufwendige wiederholte Neueichung nicht zum gewünschten Erfolg.

Es wurde auch bereits versucht, bei ionenselektiven Membranen auf Basis von Polymermaterial, ionenselektiver Komponente und Weichmachern das Problem des schwer reproduzierbaren Shiftens des Standardpotentials durch eine Beschichtung des ionenselektiven Teils mit Celluloseacetat zu lösen, um ein Auswaschen des Weichmachers, beziehungsweise eine Ablagerung von Protein an dem ionenempfindlichen Teil zu verhindern. Es sei in diesem Zusammenhang auf die Veröffentlichung von U. Oesch, D. Ammann und W. Simon in "Methodology and Clinical Applications of Ion Selective Electrodes"; Maas, A.H.J.; Boink, F.B.T.J.; Saris, N.-E.L.; Sprokholt, R.; Wimberley, P.D., Eds.; Interprint A/S: Kopenhagen, 1986, Seite 273 und folgende, verwiesen. Derartig beschichtete Membranen weisen aber eine stark verlängerte Response-Zeit auf, d.h. der entsprechende Messwert wird erst spät erreicht, was für die klinische Anwendung besonders nachteilig ist. Für die klinische Anwendung sollte nämlich der entsprechende Messwert nach etwa 30 Sekunden erreicht werden.

Eine gute Zusammenfassung der heute zur Verfügung stehenden ionenselektiven Teile, die zur klinischen Anwendung geeignet, sind und der Versuche, die Stabilitätsprobleme zu lösen, ist in der Veröffentlichung von U. Oesch, P. Anker, D. Ammann und W. Simon in "Ion Selective Electrodes"; Pungor, E.; Buzàs, I., Eds.; Akadémiai Kiado: Budapest, 1985; Seite 81 - 101, zu finden und weitere Messvorrichtungen zur Bestimmung von Ionen und therapeutischen Wirkstoffen im klinischen Bereich sind in der Veröffentlichung von B. Walter in Anal. Chem. 1983, 55, Seiten 498A bis 514A beschrieben.

In den Patent Abstracts of Japan, Band 11, Nr. 22 (P-538) [2469] vom 21. Januar 1987, wird eine Zusammenfassung des Inhalts der japanischen Patentanmeldung 61-196157 der Shimadzu Corporation beschrieben. Gemäss dieser Veröffentlichung sollen nachteilige Einflüsse der Anlagerung von Proteinen oder ähnlichen Substanzen an ionenempfindliche Filme vermieden werden. Nach dem dort beschriebenen Verfahren wird der ionenempfindliche Film hergestellt, indem man das Lösungsmittel aus einer Lösung des Filmes so abdampft, dass eine Krafteinwirkung in Richtung zu der ionenempfindlichen Oberfläche des Filmes gewährleistet ist.

Das Patent Abstract of Japan, Band 9, Nr. 299 (P-408) [2022] vom 27. November 1985, stellt eine Zusammenfassung des Inhalts der japanischen Patentanmeldung 60-135843 der Firma Olympus Kogaku Kogyo A.K. dar, und dort werden Reaktionsfilme für ionenselektive Elektroden beschrieben. Diese Filme sind für eine selektive und rasche Bestimmung von Ionen, beispielsweise Chloridanionen, in biologischen Flüssigkeiten geeignet. Die entsprechenden Copolymerfilme enthalten 10 - 40 Mol-% an Monomeren, die in der Seitenkette einen Heterocyclus aufweisen, beispielsweise entsprechende Monomereinheiten, die von 4 - Vinylpyridin, Vinylacridin oder Vinylimidazol stammen.

In der europäischen Patentveröffentlichung Nr. 0 219 742 der Firma Willi Möller, werden Kunststoff-Formkörper beschrieben, die eine hohe Elastizität und stark haftende Eigenschaften besitzen und die als ionenselektive Teile verwendet werden können. Die entsprechenden Formkörper aus Kunststoffmaterial enthalten als elastifizierende Komponente grosse Mengen an Benzophenontetracarbonsäure-tetraestern, nämlich pro 10 Gewichtsteilen des Kunststoffmaterials, 7 - 90 Gew.-Teile an dieser elastifizierenden Komponente.

In der europäischen Patentveröffentlichung 0 185 267 der Teroson GmbH werden Plastisolzusammensetzungen beschrieben, die aufgespritzt werden können und die schalldämpfend sind. Die entsprechenden Zusammensetzungen enthalten 32 - 72 Gew.-% eines Vinylchloridhomopolymerisates oder eines entsprechenden Copolymerisates aus Vinylchlorid und Vinylacetat und ausserdem 28 - 60 Gew.-% einer Mischung aus mindestens zwei Weichmachern und gegebenenfalls ausserdem Methylmethacrylathomopolymerisate oder Copolymerisate. Wenn in dieser Zusammensetzung das genannte Vinylchloridcopolymerisat verwendet wird, dann ist dieses frei von stark hydrophilen Gruppen, wie Hydroxygruppen und sauren Gruppierungen, beispielsweise Carbonsäuregruppierungen.

In Chemical Abstracts, Band 90, vom 29. Januar 1979, Seiten 45 und 46, Abstract Nr. 169601r, werden hydrophile Polymermaterialien beschrieben, die hergestellt werden, indem man Copolymerisate aus Hydroxyalkylestern von ungesättigten Carbonsäuren und ungesättigten Carbonsäureamiden verseift. Die entsprechenden Ausgangsmaterialien, wie zum Beispiel ein Copolymerisat aus 2-Hydroxyäthylmethacrylat und Acrylamid haben bereits hydrophile Eigenschaften, und zwar aufgrund der Hydroxyalkyllgruppe der entsprechenden Esterkomponente. Es wird dort erwähnt, dass das fragliche Ausgangsmaterial bereits eine Wasserabsorption von 60 % aufweist. Nach der Verseifung dieses Ausgangsmaterials mit einer wässrigen Ammoniumhydroxidlösung erhält man extrem hydrophile Polymermaterialien, in welchen jede Monomereinheit mit einer Carbonsäuregruppierung substituiert ist. Es wird erwähnt, dass diese extrem hydrophilen Polymermaterialien eine Wasserabsorption von 617 % aufweisen.

Die dort beschriebenen Polymermaterialien sind also frei von irgendwelchen hydrophoben Monomereinheiten, also Monomereinheiten, die keine stark hydrophilen Substituenten tragen. Ausserdem kann dem fraglichen Abstract kein Hinweis entnommen werden, zu welchen Verwendungszwecken die entsprechenden stark wasseraufnehmenden Polymermaterialien vorgesehen sind.

Die Veröffentlichung Chemical Abstracts, Ban 89 vom 27. Dezember 1977, Seite 35, Abstract Nr. 148730w, stellt eine Zusammenfassung des Inhaltes der japanischen Patentanmeldung 77 156,779 der Asahi-Dow Limited dar. Gemäss dieser Publikation werden aktive hydrophile Membranen hergestellt, indem man als Ausgangsmaterial ein Copolymerisat aus Aethylen und Vinylacetat verwendet, in welchem 3 - 18 Mol-% an Vinylacetatresten vorhanden sind. Aus diesen Copolymerisaten werden Membranen einer Dicke von 5 - 100 $\mu$m hergestellt, die dann sulphoniert und verseift werden, wobei man aktive hydrophile Membranen erhält, die 0,2 - 4 Gruppen der Formel-$SO_3H$ und weniger als 4,7 an-OH Gruppen enthalten. In diesen Membranen bleiben unverseifte Essigsäureestergruppierungen in einer Menge von 0,1 Mol-Aequivalenten pro Gramm zurück. Es wird dort ferner erwähnt, dass die so hergestellten Membranen eine Wasserabsorption im Bereich von 10 - 200 % und eine hohe Ionenaustauschkapazität besitzen. Die entsprechenden Membranen werden eingesetzt, um Elektrodialysen und Dialysen durchzuführen.

Trotz der intensiven Forschungsarbeiten, die in diesem Arbeitsgebiet durchgeführt wurden, war es bisher unmöglich, ionenselektive Teile zu entwikkeln, die ein konstantes Standardpotential $E_0$ gemäss der Nicolsky-Eisenmann Gleichung aufweisen und die ausserdem ein geringes Asymmetriepotential oder überhaupt kein Asymmetriepotential besassen. Vor allem war es bisher nicht möglich, entsprechende ionenselektive Teile zu entwickeln, welche die genannten Eigenschaften auch dann besassen, nachdem sie während ihrer Verwendung mit Messlösungen in Berührung gekommen waren, die relativ hochmolekulare organische Stoffe mit hydrophilen Gruppen, beispielsweise Proteine, enthielten.

Nicht einmal durch eine arbeitsaufwendige wiederholte Nacheichung des Standardpotentials mit wässrigen Lösungen oder sogar Protein enthaltenden Lösungen (siehe die Veröffentlichung von J.H. Ladenson in Analytical Proceedings 1983, Band 20, Seite 554), konnte dieses Problem gelöst werden, weil das Shiften des Standardpotentials $E_0$ probenabhängig war.

BESCHREIBUNG DER ERFINDUNG

Ziel der vorliegenden Erfindung war es, durch eine Modifizierung der Polymerkomponente des ionenselektiven Teils von Vorrichtungen zur Bestimmung der Konzentration von Ionen in flüssigen Medien die oben erläuterten Nachteile bisher bekannter entsprechender Vorrichtungen zu beseitigen. Ueberraschenderweise zeigte es sich,, dass diese Ziele erreicht werden können, indem man in das Polymermaterial eine gewisse Anzahl an hydrophilen Substituenten einführt, die aus der Gruppe ausgewählt sind, die Hydroxylgruppen, Carboxylgruppen, Sulfonsäuregruppen, Phosphonsäuregruppen oder unterschiedliche der genannten hydrophilen Gruppen umfasst.

Ein Gegenstand der vorliegenden Erfindung ist daher ein ionenselektiver Teil von Vorrichtungen zur Bestimmung der Konzentration von Ionen in flüssigen Medien, der ein Polymermaterial, eine ionenselektive Komponente, welche eine Selektivität gegenüber den zu bestimmenden Ionen aufweist, und gegebenenfalls einen Weichmacher enthält, wobei dieser ionenselektive Teil dadurch gekennzeichnet ist, dass sein Polymermaterial ein Copolymeres ist, das Monomereinheiten aufweist, die von Alkenen oder Alkinen mit einer oder mehr Mehrfachbindungen stammen, wobei diese Alkene und Alkine gegebenenfalls einen oder mehrere Substituenten tragen, die Halogenatome, Arylreste, Carbonsäureestergruppen, Carbonsäureamidgruppen, Nitrilgruppen, Sulfonsäureestergruppe, Sulfonamidgruppen, Phosphonsäureestergruppen, Phosphonsäureamidgruppen, veresterte oder verätherte Hydroxylgruppen, Ketogruppen, freie oder acetalisierte Aldehydgruppen sind, und wobei in dem Copolymeren entweder keine Gruppen vorhanden sind, welche die Kohlenstoffhauptkette dieses Copolymeren unterbrechen oder in dem Copolymerisat Aethergruppen oder Polyäthergruppierungen, Estergruppen oder Polyestergruppierungen, Urethangruppen oder Polyurethangruppierungen, Amidgruppen oder Polyamidgruppierungen, Carbonatgruppen oder Polycarbonatgruppierungen oder zwei oder mehr derartige Gruppen vorhanden sind, welche die Kohlenstoffhauptkette des Copolymeren unterbrechen, und wobei in dem Copolymerisat 5 - 25 Mol-% der Monomereinheiten des Copolymerisates ein oder mehrere hydrophile Substituenten tragen, die Hydroxylgruppen, Carboxylgruppen, Sulfonsäuregruppen, Phosphonsäuregruppen oder unterschiedliche der genannten hydrophilen Gruppen sind.

Der erfindungsgemässe ionenselektive Teil weist im Vergleich zu einem entsprechenden ionenselektiven Teil, in dessen Polymermaterial weniger als 5 Mol-% der Monomereinheiten diese hydrophilen Substituenten tragen, oder das frei von diesen ist, eine bessere Konstanz des Standardpotentiales $E_o$ der Nicolsky-Eisenmann Gleichung und ein geringeres Asymmetriepotential oder überhaupt kein Asymmetriepotential auf.

Vorzugsweise ist die Polymerkomponente der erfindungsgemässen ionenselektiven Teile ein entsprechendes Copolymeres, in welchem die Kohlenstoffhauptkette nicht durch irgendwelche Heteroatome enthaltende Gruppen, wie Aethergruppen, Estergruppen, Amidgruppen, Urethangruppen oder Carbonatgruppen unterbrochen ist.

In den erfindungsgemässen ionenselektiven Teilen sind ferner solche Copolymerkomponenten bevorzugt, in welchen diejenigen Monomereinheiten des Copolymerisates, die keine hydrophile Substituenten tragen, also die entsprechenden hydrophoben Monomereinheiten, andere Monomoreinheiten sind als diejenigen von unsubstituiertem Aethylen.

In der bereits bei der Beschreibung des Standes der Technik erwähnten europäischen Patentveröffertlichung Nr. 0 219 742 der Firma Willi Möller werden hochelastische und stark haftende Kunststoff-Formkörper beschrieben, welche die erwähnten sehr hohen Anteile von Benzophenon-tetracarbonsäuretetraestern als elastifizierende Komponente enthalten. Die Polymerkomponente dieser Kunststoff-Formkörper ist vorzugsweise ein Polyethylen, ein Polypropylen, ein Polyvinylhalogenid, ein Polystyrol, ein Polyester, ein Polyamid, ein Polyacrylnitril, ein Polyurethan, ein Polycarbonat, ein Polyvinylidenhalogenid oder ein Copolymerisat aus zwei oder mehr Monomereinheiten. Es wird dort auch erwähnt, dass in den Kunststoffen gegebenenfalls geringe Anteile an stärker hydrophilen Monomerkomponenten enthalten sein können, beispielsweise Monomereinheiten, die als Substituenten Hydroxylgruppen, Estergruppierungen oder allenfalls Carboxylgruppen enthalten. Dieser europäischen Patentveröffentlichung ist jedoch kein Hinweis zu entnehmen, dass entsprechende hydrophile Gruppen aufweisende Kunststoffe gegenüber Kunststoffen, die frei von diesen Gruppen sind, irgendwelche Vorteile aufweisen. In den Beispielen dieser Veröffentlichung werden als Kunststoffkomponente ausschliesslich Vinylchloridhomopolymerisate in Kombination mit dem dort beschriebenen Benzophenontetracarbonsäuretetraester Weichmacher eingesetzt.

Wenn in den erfindungsgemässen ionenselektiven Teilen das Polymermaterial ein Copolymerisat aus Polyvinylchlorid und Polyvinylylkohol ist, in dem 5 Mol-% der Monomereinheiten Vinylalkoholeinheiten sind, dann weist dieses Produkt aufgrund seiner Zusammensetzung aus 95 Mol-% Polyvinylchlorid, dessen Molekulargewicht 62,5 beträgt, und 5 Mol-% Polyvinylalkohol, dessen Molgewicht 44 beträgt, ein durchschnittliches Molekulargewicht der Monomereinheiten von 61,57 auf. Der Gehalt an Hydroxylgruppen beträgt in diesem Produkt dementsprechend 1,38 Gew.-%.

Wenn in dem erfindungsgemässen ionenselektiven Teil das Polymermaterial ein Copolymerisat aus Polyvinylchlorid und einer ungesättigten Carbonsäure der Formel $C_2H_3$-COOH ist und 5 Mol-% der Monomerbestandteile von dieser ungesättigten Monocarbonsäure stammen, dann weist dieses Produkt aufgrund des Molekulargewichtes der Monocarbonsäure-Monomereinheit von 72,06 ein durchschnittliches Molekulargewicht der Monomereinheiten von 63,0 auf und dementsprechend einen Gehalt an COOH-Gruppen von 3,57 Gew.-% auf.

Ein carboxylsubstituiertes Polyvinylchlorid mit einem wesentlich geringeren Gehalt an Carboxylgruppen, nämlich einem Gehalt von nur 1,7 Gew.-% ist im Handel von der Firma Aldrich erhältlich und durch Reduktion der Carboxylgruppen dieses Produktes wurde ein hydroxysubstituiertes Polyvinylchlorid hergestellt, dessen Sauerstoffgehalt 0,7 Gew.-% beträgt. Die Herstellung dieses hydroxysubstituierten Polyvinylchlorides wird in der Veröffentlichung von Trevor Satchwill und D. Jed Harrison im J. Electroanal. Chem. 202 (1986) auf Seiten 75 - 81 beschrieben. In dieser Veröffentlichung wird ferner darauf hingewiesen, dass ionenselektive Membranen, die eine entsprechende ionenselektive Komponente, einen Weichmacher, und das mit den geringen Anteilen an Hydroxylgruppen, beziehungsweise Carboxylgruppen, substituierte Polyvinylchlorid als Polymermaterial enthalten, eine wesentlich bessere Haftung auf Siliziumdioxidoberflächen aufweisen als entsprechende Membranen, in denen die Polymerkomponente ein nicht modifiziertes Polyvinylchlorid ist. Anhand der Eichkurven wurde ferner gezeigt, dass die elektrochemischen Eigenschaften entsprechender Membranen, die unsubstituiertes Polyvinylchlorid enthalten, praktisch identisch sind mit den elektrochemischen Eigenschaften der Membranen, die das mit geringen Anteilen Hydroxylgruppen, beziehungsweise Carboxylgruppen, substituierte Polyvinylchlorid enthalten.

Zu Vergleichszwecken wurden ionenselektive Teile hergestellt, in welchen das Polymermaterial ein Polyvinylchloridcopolymerisat ist, in welchem jedoch nur 3 Mol-% der Monomereinheit von Polyvinylalkohol, beziehungsweise von einer ungesättigten Monocarbonsäure der Formel $C_2H_3$-COOH stammen. Entsprechende ionenselektive Teile zeigten nach einem Kontakt mit Protein enthaltenden Lösungen kaum eine bessere Konstanz des Standardpotentiales als entsprechende ionenselektive Teile, bei denen das Polymermaterial nicht modifiziertes Polyvinylchlorid ist.

Das in diesem Vergleichsversuch eingesetzte mit Hydroxylgruppen modifizierte Polyvinylchlorid hat etwa den gleichen niedrigen Gehalt an Hydroxylgruppen wie das Polyvinylchlorid, das in der oben genannten Veröffentlichung von Trevor Satchwill et al. beschrieben ist. Es unterscheidet sich aber strukturell von dem dort beschriebenen Polyvinylchlorid. Bei dem in der Veröffentlichung beschriebenen Polyvinylchlorid sind durch die Reduktion der Carboxylgruppen die Gruppierungen der Formel -$CH_2$-OH entstanden, die an die Polymerkette gebunden sind, während bei dem Polymermaterial zu Vergleichszwecken die Hydroxylgruppen des Polyvinylalkohols direkt an die Polymerkette gebunden sind.

Die durchgeführten Vergleichsversuche zeigen also, dass es wesentlich ist, dass die Polymermaterialien der erfindungsgemässen ionenselektiven Teile eine ausreichende Menge an hydrophilen Substituenten tragen, weil dann, wenn in dem Copolymerisat deutlich weniger als 5 % der Monomereinheiten des Copolymerisates hydrophile Substituenten tragen, die Hydroxylgruppen, Carboxylgruppen, Sulfonsäuregruppen oder Phosphonsäuregruppen sind, die Vorteile bezüglich der Konstanz des Standardpotentiales und des Fehlens eines Asymmetriepotentiales nicht mehr erreicht werden können. Andererseits ist es aber auch wesentlich, dass nicht mehr als 25 Mol-% der Monomereinheiten des Copolymerisates von Monomeren stammen, welche die genannten hydrophilen Substituenten tragen, weil bei höheren Gehalten an hydrophilen Gruppen die entsprechenden ionenselektiven Membranen zu stark hydrophile Eigenschaften aufweisen.

Die erfindungsgemässen ionenselektiven Teile sind also zur Bestimmung entsprechender Ionen in flüssigen Medien geeignet, die als weitere Komponenten organische Stoffe und insbesondere relativ hochmolekulare organische Stoffe mit hydrophilen Gruppen, beispielsweise Proteine, enthalten. Nach dem Kontakt der ionenselektiven Teile mit derartigen Messlösungen ist die Konstanz des Standardpotentiales gewährleistet, also es ist kein Shiften oder Driften des Standardpotentiales $E_0$ festzustellen. Dementsprechend erübrigt sich die arbeitsaufwendige wiederholte Nacheichung des Standardpotentiales mit wässrigen Lösungen oder Protein enthaltenden Lösungen.

Ein weiterer Vorteil der erfindungsgemässen ionenselektiven Teile besteht darin, dass der entsprechende Messwert rasch erreicht wird. Insbesondere bei der Durchführung von Messungen in proteinhaltigen Lösungen ist die Ansprech-Zeit von erfindungsgemässen ionenselektiven Teilen bedeutend schneller als die Ansprech-Zeit bisher verwendeter entsprechender ionenselektiver Teile, deren Polymerkomponente frei von hydrophilen Gruppen war.

In entsprechenden Diagrammen, bei denen auf der Ordinate die gemessene EMK aufgetragen ist und auf der Abszisse der Logarithmus der Konzentration, beziehungsweise der Aktivität des zu bestimmenden Anions, beziehungsweise Kations, aufgetragen ist, ist der entsprechende Anstieg der Kurve für erfindungsgemäss ionenselektive Teile und ionenselektive Teile zu Vergleichszwecken, die analog aufgebaut sind, jedoch ein Polymermaterial enthalten, das frei von hydrophilen Gruppen ist, praktisch identisch. (Es sei in diesem Zusammenhang auf die Nicolsky-Eisenmann Gleichung und die dazu gegebenen Erläuterungen in der bereits vorne genannten Veröffentlichung von U. Oesch, Clinical Chemistry, Vol. 32, Nr. 8 (1986), Seiten 1448 - 1459, verwiesen.)

Bezüglich der Nicolsky-Eisenmann Gleichung sei ferner auf die Veröffentlichung "Calcium-selective electrodes" von W. Simon, D. Ammann, M. Oehme und W.E. Morf in Annals of the New York academy of Sciences, Band 307, Seiten 52 - 70, vom 28. April 1978 verwiesen. Dort wird im Zusammenhang mit der Bestimmung von Calciumionen erläutert, dass sich die Nicolsky-Eisenmann Gleichung auf die in der Folge angeführte vereinfachte Form bringen lässt, vorausgesetzt, dass in der Probelösung, in der die Calciumionen bestimmt werden, keine anderen, diese Bestimmung störenden Ionen anwesend sind.

$$E_{Ca} = E^0{}_{Ca} + s \cdot \log a_{Ca}.$$

In dieser Gleichung bedeuten:
$E^0{}_{Ca}$    das Standardpotential $E_0$ für die Calciumionen,
$a_{Ca}$    die Aktivität der Calciumionen in der Probelösung und
$s$    der Anstieg der Kurve.

Ein weiterer Vorteil der erfindungsgemässen ionenselektiven Teile besteht darin, dass ihr elektrischer Widerstand deutlich erniedrigt ist, im Vergleich zu entsprechenden ionenselektiven Teilen, deren Polymerkomponente frei von hydrophilen Gruppen ist.

Ausserdem weisen erfindungsgemässe ionenselektive Teile, beispielsweise entsprechende ionenselektive Membranen, an Substraten, beispielsweise Substraten, die Silizium enthalten, wie Glas, Quarzglas und Silikonharze, eine verbesserte Haftung auf, im Vergleich zu entsprechenden ionenselektiven Teilen, deren Polymermaterial frei von hydrophilen Substituenten ist.

Die in den erfindungsgemässen ionenselektiven Teilen enthaltenen Copolymerisate und auch die entsprechenden ionenselektiven Teile nehmen jedoch nur geringe Mengen an Wasser auf. Die entsprechenden Copolymerisate besitzen im allgemeinen eine Wasseraufnahme von weniger als 10 Gew.-%, bezogen auf das Gesamtgewicht aus Copolymerisat und aufgenommenem Wasser, und vorzugsweise beträgt diese Wasseraufnahme nur 8 Gew.-% oder noch weniger.

In bevorzugten erfindungsgemässen ionenselektiven Teilen ist die Polymerkomponente ein Polyvinylhalogenidcopolymerisat oder ein Polyvinylidenhalogenidcopolymerisat, vorzugsweise ein entsprechendes Polymerisat, in welchem die Halogenatome Chloratome sind.

In diesen Halogen enthaltenden Copolymerisaten sind 5 - 25 Mol-% der Monomereinheiten dieser Copolymerisate solche, welche die genannten hydrophilen Substituenten tragen und in den fraglichen Copolymerisaten sind gegebenenfalls noch zusätzliche Substituenten vorhanden, die Estergruppierungen, Säureamidgruppierungen, Nitrilgruppen, Carbonatgruppierungen und/oder Urethangruppierungen sind, und speziell bevorzugt sind Polyvinylhalogenidcopolymerisate oder Polyvinylidenhalogenidcopolymerisate, in denen die hydrophilen Gruppen Hydroxylgruppen oder Carboxylgruppen sind. Das bevorzugte Halogenid dieser Copolymerisate ist das Chlorid.

Es wurde bereits betont, dass es zur Erzielung der angestrebten Vorteile wesentlich ist, dass die Polymerkomponente der erfindungsgemässen Copolymerisate 5 - 25 Mol-% an Monomereinheiten enthält, die mit ein oder mehreren hydrophilen Substituenten substituiert sind, die aus der Gruppe ausgewählt sind, welche Hydroxylgruppen, Carbonsäuregruppen, Sulfonsäuregruppen, Phosphonsäuregruppen oder zwei oder mehr dieser hydrophilen Gruppen enthalten.

Das Polymermaterial der erfindungsgemässen ionenselektiven Teile ist vorzugsweise ein solches, in welchem 7,0 - 18,2 Mol-% der Monomereinheiten des Copolymerisates ein oder mehrere hydrophile Substituenten tragen, die Hydroxylgruppen, Carboxylgruppen, Sulfonsäuregruppen, Phosphonsäuregruppen oder unterschiedliche der genannten hydrophilen Gruppen sind. Speziell bevorzugt sind Copolymerisate, in welchen 10,9 - 13,8 Mol-% der Monomereinheiten die genannten hydrophilen Gruppen tragen.

Auch bei den Copolymerisaten aus Vinylchlorid und Vinylalkohol oder Vinylchlorid und ungesättigten Monocarbonsäuren oder Polycarbonsäuren oder Vinylchlorid, Vinylalkohol und ungesätigte Monocarbonsäuren oder Polycarbonsäuren, müssen 5 - 25 Mol-% der Monomereinheiten des Copolymeres von Polyvinylalkohol und/oder den ungesättigten Monocarbonsäuren oder Polycarbonsäuren stammen. Die entsprechenden Copolymerisate können frei von weiteren Substituenten sein oder sie können ausserdem noch Substituenten enthalten, wie zum Beispiel Carbonsäureestergruppen, Carbonsäureamidgruppen oder Nitrilgruppen, und speziell bevorzugt, veresterte Hydroxygruppen oder veresterte Carbonsäuregruppen.

Auch bei diesen bevorzugten Copolymerisaten aus Vinylchlorid und Vinylalkohol und/oder ungesättigten Monocarbonsäuren oder Polycarbonsäuren, ist es vorteilhaft, wenn 7,0 - 18,2 Mol-% der Monomereinheiten des Copolymerisates und speziell bevorzugt, 10,9 - 13,8 Mol-% der Monomereinheiten des Copolymerisates von Vinylalkohol und/oder den ungesättigten Monocarbonsäuren oder Polycarbonsäuren stammen.

Die erfindungsgemässen ionenselektiven Teile können ohne Verwendung von Weichmachern hergestellt werden, weil sie im Vergleich zu ionenselektiven Teilen, deren Polymerkomponente frei von hydrophilen Substituenten ist, stärker hydrophile Eigenschaften und auch gute Haftung auf Substraten aufweisen.

Im Gegensatz dazu enthielten die aus dem Stande der Technik bekannten ionenselektiven Teile, deren Polymerkomponente frei von irgendwelchen hydrophilen Substituenten war, praktisch immer als weitere Komponente einen Weichmacher, weil ansonsten die hydrophilen Eigenschaften der Zusammensetzung aus ionenempfindlichem Teil und hydrophobem Polymermaterial unzureichend wären.

Häufig enthalten jedoch auch die erfindungsgemässen ionenselektiven Teile, zusätzlich zu der Polymerkomponente und der ionenselektiven Komponente, noch einen Weichmacher. In diesem Falle haben die entsprechenden ionenselektiven Teile vorzugsweise die folgende Zusammensetzung:

0,5 - 5  Gew.-% an der ionenselektiven Komponente

30 - 50  Gew.-% an dem hydrophile Gruppen aufweisenden Copolymerisat und der Rest auf 100 Gew-% an dem Weichmacher.

Entsprechende ionenselektive Teile, in denen die Polymerkomponente ein hydrophile Gruppen enthaltendes Polyvinylchlorid ist, haben häufig die folgende Zusammensetzung:

0,5 - 1  Gew.-% an der ionenselektiven Komponente

30 - 36  Gew.-% an dem Polyvinylchloridcopolymer, welches hydrophile Gruppen enthält und der Rest auf 100 Gew.-% an einem Weichmacher.

Typische Beispiele für Weichmacher, die in den erfindungsgemässen ionenselektiven Teilen enthalten sein können, sind entsprechende Esterweichmacher, beispielsweise Dicarbonsäurediester oder Tetracarbonsäuretetraester, wie zum Beispiel die entsprechenden Ester der Adipinsäure oder Sebacinsäure mit Alkanolen von etwa 8 Kohlenstoffatomen.

Die ionenselektive Komponente der erfindungsgemässen ionenselektiven Teile kann irgendeine beliebige ionenselektive Komponente sein, vorausgesetzt, dass sie die nötige Selektivität für das zu bestimmende Ion gegenüber anderen Ionen aufweist, die möglicherweise in der zu testenden Probe enthalten sein können.

Wenn beispielsweise der ionenselektive Teil zur Bestimmung von Kaliumionen verwendet werden soll, dann ist eine bevorzugte kaliumempfindliche Komponente dieses Teils das Valinomycin.

Eine grosse Anzahl an ionenselektiven Komponenten für die Bestimmung von verschiedensten Ionen, beispielsweise Kationen, ist bereits in der Literatur beschrieben. So sind beispielsweise entsprechende ionenselektive Komponenten zur Bestimmung von Calciumionen, Natriumionen und Lithiumionen in der Fachwelt bekannt, und einige derselben werden später noch genannt.

Die ionenselektive Komponente kann jedoch auch eine ionenempfindliche Komponente zur Bestimmung der Konzentration, beziehungsweise Aktivität von Anionen sein, beispielsweise zur Bestimmung von Carbonatanionen oder von Anionen von Oxasäuren, wie zum Beispiel Sulfaten oder Carbonsäuren.

Ueberraschenderweise zeigte es sich, dass die erfindungsgemässen ionenempfindlichen Teile, unabhängig von der in ihnen enthaltenen ionenempfindlichen Komponente, die Vorteile eines konstanten, also nicht shiftenden oder driftenden Standardpotentiales und der Abwesenheit eines Asymmetriepotentiales aufweisen, wenn sie mit ionenselektiven Teilen verglichen werden, deren Polymerkomponente frei von hydrophilen Gruppen ist oder deren Polymerkomponente einen niedrigeren oder höheren Gehalt an hydrophilen Gruppen aufweist als die Polymerkomponente der erfindungsgemässen ionenselektiven Teile.

Ein weiterer Gegenstand der vorliegenden Erfindung ist die Verwendung des erfindungsgemässen ionenselektiven Teiles in einer Vorrichtung zur Bestimmung der Konzentrationen eines oder mehrerer Ionen. Diese Verwendung ist dadurch gekennzeichnet, dass der ionenselektive Teil in Form einer ionenselektiven Beschichtung von Halbleitern oder Leitern oder in Form von ionenselektiven Membranen, beispielsweise Membranen ionenselektiver Elektroden, vorliegt oder dass der ionenselektive Teil ein Teil eines kleinen, mehrere Ionen testenden Systems ist, wobei in diesem miniaturisierten System ionenselektive Bereiche, die für unterschiedliche Arten von Ionen empfindlich sind, in naher Umgebung zueinander angeordnet sind.

So können die erfindungsgemässen ionenenselektiven Teile beispielsweise ionenselektive Membranen für ionenempfindliche Elektroden sein, wie zum Beispiel die entsprechenden Teile von Durchflusselektroden oder Elektroden des Kathetertyps. Des weiteren können derartige ionenselektive Membranen in entsprechenden Slides zur Durchführung von potentiometrischen Analysen eingesetzt werden oder Membranen von ionenselektiven Feldeffekttransistoren sein.

Die erfindungsgemässen ionenselektiven Teile können auch die entsprechenden ionenselektiven Teile eines kleinen, mehrere Ionen testenden Systems sein, wobei in diesen miniaturisierten Systemen ionenselektive Bereiche, die für unterschiedliche Arten von Ionen empfindlich sind, in naher Umgebung zueinander angeordnet sind.

Minielektroden, in denen die erfindungsgemässen ionenselektiven Teile verwendet werden können, sind ferner in der Veröffentlichung von R.E. Dohner, D. Wegmann, W.E. Morf und W. Simon in Analytical Chemistry, Band 58, 1986, auf den Seiten 2585-2589 beschrieben.

Ein weiteres Einsatzgebiet der erfindungsgemässen ionenselektiven Teile sind ionenselektive Beschichtungen von Leitern, also sogenannte coated wireelectrodes. Derartige Elektrodentypen sind in dem entsprechenden Abschnitt des Buches "Ion Selective Electrodes in Analytical Chemistry", Band 2, herausgegeben von Henry Freiser, Verlag Plenum Press, New York und London, 1980, beschrieben.

Wie bereits erwähnt wurde, sind die erfindungsgemässen ionenselektiven Teile in denjenigen Einsatzgebieten gegenüber bisher bekannten ionenselektiven Teilen besonders vorteilhaft, bei denen die entsprechenden ionenselektiven Teile mit Probelösungen in Berührung kommen, die organische Materialien mit relativ hohem Molekulargewicht oder biologische Materialien enthalten, wie zum Beispiel Proteine, Kohlehydrate eines höheren Molekulargewichts, wie zum Beispiel Produkte, die erhalten werden, wenn Stärke oder Cellulose einer unvollständigen Hydrolyse unterworfen werden.

Gemäss einer bevorzugten Verwendung des erfindungsgemässen ionenelektiven Teiles wird dieser als ionenselektiver Teil in einer Vorrichtung zur Bestimmung der entsprechenden Ionen in flüssigen Medien eingesetzt, die als weitere Komponenten organische Stoffe und insbesondere hochmolekulare organische Stoffe mit hydrophilen Gruppen, beispielsweise Proteine, enthalten, und in diesem Fall weist der ionenselektive Teil nach dem Kontakt mit derartigen Messproben eine gute Konstanz des Standardpotentials und praktisch kein Asymmetriepotential auf.

Die entsprechenden Vorrichtungen können zur Bestimmung von Kationen und Anionen in den verschiedensten Probelösungen eingesetzt werden, beispielsweise in Körperflüssigkeiten. Derartige Vorrichtungen sind insbesondere zur klinischen Anwendung geeignet.

Vorrichtungen, welche mit erfindungsgemässen ionenselektiven Teilen ausgestattet sind, können also verwendet werden um beliebige Arten an Kationen und Anionen in flüssigen Proben zu bestimmen, welche ausserdem die erwähnten organischen Bestandteile höheren Molekulargewichts enthalten. Beispiele für derartige Probelösungen sind Produktströme, die bei der industriellen Herstellung verschiedener chemischer Produkte oder biochemischer Produkte, Zur Herstellung von Nahrungsmitteln oder Aehnlichem untersucht werden müssen. Die Untersuchung derartiger Proben ist bei der Herstellung von verschiedenen pharmazeutisch aktiven Wirkstoffen, Farbstoffen, Stärkederivaten, Cellulosederivaten und verschiedenen Produkten, die durch Fermentationsverfahren hergestellt werden, häufig nötig.

Ein weiteres wichtiges Einsatzgebiet für. erfindungsgemässe ionenselektive Teile ist die Bestimmung der Konzentration, bezw. Aktivität, verschiedener Ionen in flüssigen Proben von Abfallmaterial, die ausserdem noch die genannten organischen Materialien höheren Molekulargewichts enthalten, wie zum Beispiel die Durchführung einer Bestimmung von Ionenkonzentrationen in Abwässern.

Des weiteren ist es vorteilhaft, Vorrichtungen, die zur Bestimmung der Konzentration von Ionen in Körperflüssigkeiten dienen, mit erfindungsgemässen ionenselektiven Teilen auszustatten. Beispiele für derartige Vorrichtungen sind im klinischen Anwendungsbereich eingesetzte Apparaturen zur Bestimmung von Ionen in Gesamtblut, Blutserum oder Blutplasma oder zur Bestimmung von Ionen in Harn. Wenn die entsprechenden Vorrichtungen mit erfindungsgemässen ionenselektiven Teilen ausgestattet werden, dann ist eine sehr rasche und verlässliche Bestimmung verschiedenster Arten an Ionen im klinischen Anwendungsbereich möglich, beispielsweise die Bestimmung der Kationen, des Lithiums, Natriums, Kaliums oder Calciums und die der Anionen, wie zum Beispiel von Carbonaten, Sulfaten und den Anionen von sauerstoffenthaltenden Säuren und auch die Bestimmung von Sauerstoff in diesen flüssigen Materialien.

Es zeigte sich ferner, dass es vorteilhaft ist, wenn die Polymerkomponente der erfindungsgemässen ionenempfindlichen Teile ein hohes Molekulargewicht aufweist, und vorzugsweise soll dass Molekulargewicht der entsprechenden, hydrophile Gruppen aufweisenden Copolymerisate, mindestens 10'000 betragen. Vorteilhafter ist es jedoch, wenn die entsprechenden Copolymerisate ein Molekulargewicht von mindestens 40'000 und speziell bevorzugt, von mindestens 50'000, aufweisen, wie zum Beispiel ein Molekulargewicht von 90'000 oder höher. Der K-wert dieser Polymermaterialien beträgt üblicherweise mehr als 50.

Die Polymerkomponente der erfindungsgemässen ionenselektiven Teile kann nach irgendeinem Verfahren erzeugt werden, das für die Herstellung von Polymermaterialien gut bekannt ist, grundsätzlich beispielsweise durch eine Polymerisation der entsprechenden Monomereinheiten.

Im allgemeinen ist es jedoch vorteilhafter, die Polymerkomponente der erfindungsgemässen ionenempfindlichen Teile herzustellen, indem man als Ausgangsmaterial ein Homopolymerisat oder Copolymerisat verwendet, in welchem die hydrophilen Gruppen der gewünschten Endprodukte, nämlich die Hydroxygruppen, Carbonsäuregruppen, Sulfonsäuregruppen, Phosphonsäuregruppen oder zwei oder mehr dieser hydrophilen Gruppen, in geschützter Form vorliegen und indem man dann diese Schutzgruppen abspaltet.

Ein weiterer Gegenstand der vorliegenden Erfindung ist daher ein Verfahren zur Herstellung des Copolymeren, das die Polymerkomponente der erfindungsgemässen ionenselektiven Teile darstellt. Dieses Verfahren ist dadurch gekennzeichnet, dass man als Ausgangsmaterial ein entsprechendes Homopolymerisat oder Copolymerisat verwendet, in welchem die Hydroxylgruppen in veresterter Form, Carboxylgruppen, Sulfonsäuregruppen und/oder Phosphonsäuregruppen in veresterter Form, in Form von Säureamiden oder als Nitril vorliegen, und dass man dieses Ausgangsmaterial einer Verseifung unterwirft, durch die die entsprechenden Hydroxylgruppen, Carboxylgruppen, Phosphonsäuregruppen, bzw. Sulfonsäuregruppen freigesetzt werden und die Verseifung so lange durchführt, bis in dem Copolymerisat der Anteil an Monomereinheiten, die ein oder mehr hydrophile Substituenten aufweisen, welche Hydroxylgruppen, Carboxylgruppen, Sulfonsäuregruppen, Phosphonsäuregruppen oder unterschiedliche der genannten Gruppen sind, 5 - 25 Mol-% beträgt.

In den als Ausgangsmaterial verwendeten Copolymerisaten können beispielsweise die Hydroxylgruppen in veresterter Form vorliegen, insbesondere in Form eines Esters mit einer niederen aliphatischen Carbonsäure, beispielsweise einer gesättigten Carbonsäure mit 2 - 5 Kohlenstoffatomen, und speziell bevorzugt als Acetat.

In dem verwendeten Ausgangsmaterial sind ferner geeignete Schutzgruppen für Carboxylgruppen, Sulfonsäuregruppen und/oder Phosphonsäuregruppen, entsprechende Estergruppierungen, insbesondere niedere Alkylester mit 1 - 6 Kohlenstoffatomen, vorzugsweise die Methylester, Aethylester, n-Propylester oder Isopropylester. Geeignete Schutzgruppen für die Carboxylgruppen, Sulfonsäuregruppen, beziehungsweise Phosphonsäuregruppen, sind ferner die entsprechenden Säureamide, wobei bevorzugte amidbildende Amine Ammoniak, niedere Monoalkylamine oder niedere Dialkylamine sind. Geschützte Carboxylgruppen können allenfalls auch in Form eines Nitriles vorliegen.

Bei der Herstellung eines Polymermateriales, das als hydrophile Gruppen sowohl Hydroxylgruppen als auch Carboxylgruppen aufweist, kann die entsprechend geschützte Form dieser beiden Gruppen auch ein innerer Ester sein, also ein cyclisches Lacton. Bei Verseifung eines entsprechenden Homopolymerisates oder Copolymerisates, das in seiner Polymerstruktur Lactongruppierungen aufweist, entsteht dann pro verseifter Lactongruppe gleichzeitig eine Hydroxylgruppe und eine Carboxylgruppe.

Gemäss einer bevorzugten Ausführungsart dieses Herstellungsverfahrens wird ein Polyvinylhalogenidcopolymerisat oder ein Polyvinylidenhalogenidcopolymerisat erzeugt, wobei in dem Copolymerisat 5 - 25 Mol-% der Monomereinheiten ein oder mehrere hydrophile Substituenten tragen, die Hydroxylgruppen, Carboxylgruppen, Sulfonsäuregruppen, Phosphonsäuregruppen oder unterschiedliche der genannten hydrophilen Gruppen sind, indem man aus einem Polyvinylhalogenidcopolymerisat, beziehungsweise Polyvinylidenhalogenidcopolymerisat, in welchem die Hydroxylgruppen in veresterter Form und die Carboxylgruppen, Sulfonsäuregruppen und/oder Phosphonsäuregruppen, in veresterter Form oder in Form von Säureamiden vorliegen, die entsprechenden Hydroxylgruppen, Carboxylgruppen, Sulfonsäuregruppen, beziehungsweise Phosphonsäuregruppen, durch Verseifung freisetzt, bis in dem Vinylhalogenid-copolymerisat, beziehungsweise Vinylidenhalogenid-copolymerisat, der Anteil an Monomereinheiten, die ein oder mehr der genannten hydrophilen Substituenten aufweisen, 5 - 25 Mol-%, vorzugsweise 7,0 - 18,2 Mol-% beträgt.

Bevorzugte Polyvinylhalogenid-Copolymere, bzw. Polyvinylidenhalogenid-Copolymere, die nach diesem Verfahren hergestellt werden, sind die entsprechenden Polyvinylchloridcopolymeren, bzw. Polyvinylidenchloridcopolymeren.

Gemäss einer bevorzugten Ausführungsart dieses Herstellungsverfahrens erzeugt man ein Copolymerisat aus Vinylchlorid, Vinylalkohol und Vinylacetat, wobei in dem Copolymerisat 7,0 - 18,2 Mol-% der Monomereinheiten, vorzugsweise 10,9 - 13,8 Mol-% der Monomereinheiten, von Vinylalkohol stammen, indem man als Ausgangsmaterial ein Copolymerisat aus Vinylchlorid und Vinylacetat verwendet, in welchem mindestens 7,0 Mol-% der Monomereinheiten von Vinylacetat stammen und dieses Ausgangsmaterial einer Verseifung unterwirft, wodurch die Acetatgruppen abgespalten und die Hydroxygruppen freigesetzt werden, und wobei man diese Verseifungsreaktion so lange durchführt, bis in dem erhaltenen Copolymerisat 7,0 - 18,2 Mol-% der Monomereinheiten, vorzugsweise 10,9 - 13,8 Mol-% der Monomereinheiten, von Vinylalkohol stammen.

Die erfindungsgemässen ionenselektiven Teile werden vorzugsweise hergestellt, indem man das hydrophile Gruppen aufweisende Copolymerisat und die ionenselektive Komponente und gegebenenfalls ausserdem einen Weichmacher, in einem flüchtigen organischen Lösungsmittel löst, anschliessend diese Lösung zu dem ionenselektiven Teil vergiesst und das Lösungsmittel abdampfen lässt, bis ein entsprechender lösungsmittelfreier ionenselektiver Teil zurückbleibt.

Es zeigte sich, dass es besonders vorteilhaft ist, wenn das Lösungsmittel sehr langsam abgedampft wird. Es kann angenommen werden, dass durch die langsame Abdampfung des Lösungsmittels verhindert wird, dass in den Oberflächenbereichen der vergossenen Formkörper, beispielsweise einer entsprechenden Membran, bereits ein deutliches Absinken des Lösungsmittelgehaltes auftritt, während in den unteren Bereichen dieses ionenselektiven Teiles noch wesentlich höhere Gehalte an dem flüchtigen Lösungsmittel vorhanden sind. Möglicherweise wird durch die sehr langsame Abdampfung des flüchtigen Lösungsmittels auch eine bessere Orientierung der Polymerketten der Copolymerkomponente des entsprechenden Formkörpers erreicht.

Die sehr langsame Abdampfung des Lösungsmittels ist vor allem dann wichtig, wenn ionenselektive Teile unter Verwendung entsprechender Copolymerisate eines hohen Molekulargewichts, hergestellt werden vorzugsweise von Copolymerisaten, deren Molekulargewicht mindestens 40'000, und speziell bevorzugt, etwa 90'000 oder mehr beträgt.

Wenn man die ionenselektiven Teile unter Verwendung einer entsprechenden Polymerkomponente hohen Molekulargewichts herstellt, dann ist es vorteilhaft, die entsprechenden ionenselektiven Teile zu vergiessen und sie anschliessend in einer Atmosphäre zu belassen, die an dem entsprechenden flüchtigen organischen Lösungsmittel gesättigt ist. Allmählich wird dann der Lösungsmittelgehalt in der Atmosphäre vermindert, beispielsweise während 2 - 6 Tagen, zum Beispiel während vier Tagen, bis dann schliesslich die umgebende Atmosphäre lösungsmittelfrei ist. Es gelingt so vollständig lösungsmittelfreie ionenselektive Teile herzustellen.

Als flüchtiges Lösungsmittel kann bei diesem Herstellungsverfahren beispielsweise Tetrahydrofuran verwendet werden.

Die Erfindung sei nun anhand von Beispielen näher erläutert.

Beispiel 1

Herstellung eines Copolymeren aus Vinylalkohol und Vinylchlorid

Das Ausgangsmaterial für die Herstellung dieses Copolymerisates war ein Copolymerisat aus 81 Gew.-% Vinylchlorid, 17 Gew.-% Vinylacetat und 2 Gew.-% Maleinsäure. Dieses Produkt ist ein Handelsprodukt, das von der Scientific Polymer-products Inc., Ontario N.Y., USA bezogen wurde.

5 g dieses Copolymeren wurden in 100 ml Tetrahydrofuran gelöst und diese Lösung wurde tropfenweise während zehn Minuten zu 30 ml einer gerührten 1 Gew.-%igen methanolischen Natriumhydroxidlösung zugesetzt, die auf eine Temperatur im Bereich von 50 - 60°C erhitzt worden war. Anschliessend rührte man 1½ Stunden lang bei einer Temperatur von 63° C weiter und dampfte etwa die Hälfte des Methanols ab. Die restliche Lösung wurde durch ein Papierfilter filtriert und in 1,5 l Wasser einer Temperatur von 25° C unter Rühren eingegossen.

Der gebildete Niederschlag wurde nach 10 Minuten abfiltriert, in 300 ml Methanol suspendiert und erneut abfiltriert. Der Filterrückstand wurde nochmals in 200 ml Methanol suspendiert und in 0,8 l Wasser einer Temperatur von 25° C eingegossen.

Nach dem erneuten Filtrieren und dem Trocknen unter Vakuum bei einer Temperatur von 60°C erhielt man 1,2 g des Copolymerisates aus Vinylalkohol und Vinylchlorid. Durch das Infrarotspektrum konnte nachgewiesen werden, dass das scharfe Signal der CO-Gruppe der Acetatgruppierung des Ausgangsmateriales bei 1731 cm$^{-1}$ verschwunden war und das verseifte Endprodukt zeigte das breite Signal der -OH Funktion bei 3400 cm$^{-1}$.

Durch die angewandten Reaktionsbedingungen waren also sämtliche Acetatgruppen des Ausgangscopolymerisates zu Hydroxylgruppen verseift worden und das erhaltene Endprodukt war dementsprechend ein Copolymerisat aus 87,7 Mol-% Vinylchlorid plus 12,3 Mol-% Vinylalkohol.

Beispiel 2

Herstellung eines Copolymeren aus Vinylalkohol und Vinylchlorid

Das Ausgangsmaterial für die Herstellung dieses Copolymeren war ein Copolymerisat der folgenden Zusammensetzung:

82,9    Gew.-% an Vinylchlorid und

17,1    Gew.-% an Vinylacetat.

Aufgrund des Molekulargewichtes des Vinylchlorides von 62,5 und des Molekulargewichtes des Vinylacetates von 86,09, war die molare Zusammensetzung dieses als Ausgangsmaterial verwendeten Copolymerisates wie folgt:

86,975    Mol-% an Vinylchlorid

13,025    Mol-% an Vinylacetat.

5 g dieses Copolymerisates wurden nach dem in Beispiel 1 beschriebenen Verfahren verseift.

Man erhielt dabei 1,2 g eines entsprechenden Copolymerisates aus Vinylalkohol und Vinylchlorid.

Durch das Infrarotspektrum konnte nachgewiesen werden, dass durch diese Verseifungsreaktion alle Acetatgruppen des Ausgangsmaterials in Hydroxygruppen umgewandelt worden waren. Das scharfe Signal der Acetatgruppierungen des Ausgangsmateriales bei 1731 cm$^{-1}$ war verschwunden und das Produkt zeigte das breite Signal der -OH Funktion bei 3400 cm$^{-1}$.

Das nach diesem Verfahren hergestellte Copolymere enthielt 87,0 Mol-% an Vinylchlorid und 13,0 Mol-% an Vinylalkohol.

Beispiel 3

Herstellung von ionenselektiven Membranen

Bei der Herstellung der erfindungsgemässen ionenselektiven Membranen wurde als Polymermaterial das gemäss Beispiel 1 hergestellte oder das gemäss Beispiel 2 hergestellte Copolymerisat aus Vinylchlorid und Vinylalkohol verwendet.

Bei den entsprechenden ionenselektiven Membranen zu Vergleichszwecken wurde als Polymermaterial ein Polyvinylchlorid verwendet, das frei von hydrophilen Substituenten ist. Dieses Polyvinylchlorid war das Produkt mit der Bezeichnung PVC-hochmolekular, Fluka Nr. 81392, der Firma Fluka, CH-9470 Buchs, Schweiz.

Alle erfindungsgemässen ionenselektiven Membranen und alle ionenselektiven Membranen zu Vergleichszwecken, ausgenommen diejenigen, in welchen die ionenselektive Komponente die gegenüber Calciumionen empfindliche ionenselektive Komponente war, wiesen die folgende Zusammensetzung auf:

1    Gew.-% an der ionenselektiven Komponente

66    Gew.-% an dem Dicarbonsäurediesterweichmacher und

33    Gew.-% an der Polymerkomponente.

Der verwendete Dicarbonsäurediesterweichmacher war das Bis(1-butyl-pentyl)adipat.

Die ionenselektive Komponente der Membranen zur Bestimmung der Calciumionen war das Diäthyl-N,N′-[(4R,5R)-4,5-dimethyl-1,8-dioxo-3,6-dioxaoctamethylen] bis (12-methylamino-dodecanoat), nämlich das Diamid der Struktur 12, das in der bereits weiter vorne genannten Veröffentlichung von U. Oesch, P. Anker, D. Ammann und W. Simon in "Ion Selective Electrodes"; Pungor, E.; Buzàs, I., Eds.; Akadémiai Kiadó: Budapest, 1985, angeführt ist.

Die entsprechenden gegenüber Calciumionen empfindlichen erfindungsgemässen Membranen und auch die Membranen zu Vergleichszwecken hatten die folgende Zusammensetzung:

3,3    Gew.-% an der ionenselektiven Komponente

2,1    Gew.-% an Kalium-tetrakis-parachlorphenyl-borat

63,7    Gew.-% des Dicarbonsäurediesterweichmachers und

30,9    Gew.-% an dem Polymermaterial.

Bei der Herstellung der einen Gruppe der gegenüber Natriumionen selektiven Membranen wurde als ionenselektive Komponente das N, N′-Dibenzyl-N,N′-diphenyl-1,2-phenylendioxydiacetamid verwendet, nämlich die Verbindung der Struktur 5, die auf Seite 101 der oben genannten Veröffentlichung genannt wird.

In einer zweiten Serie von gegenüber Natriumionen selektiven Membranen wurde als ionenselektive Komponente das N,N,N′,N′-Tetracyclohexyl-1,2-phenylen-dioxydiacetamid eingesetzt, also ein entsprechendes Dicarbonsäurediamid, dessen amidbildendes Amin Dicyclohexylamin ist.

Des weiteren wurden gegenüber Kaliumionen empfindliche erfindungsgemässe Membranen und Membranen zu Vergleichszwecken hergestellt. Die ionenselektive Komponente dieser Membranen war Valinomycin.

Die Herstellung der Membranen erfolgte nach dem Verfahren, das von R. Dohner, D. Wegmann, W.E. Morf und W. Simon in Anal. Chem. 1986, 58, Seiten 2585- 2589 und der dort zitierten Literatur beschrieben ist.

Wenn zur Herstellung der ionenselektiven Membranen als Polymermaterial das in Beispiel 2 beschriebene Copolymerisat aus Vinylchlorid und Vinylalkohol eingesetzt wurde, und als Lösungsmittel für das Vergiessen der Membran Tetrahydrofuran verwendet wurde, dann wurde dieses Lösungsmittel nach dem weiter vorne beschriebenen Verfahren sehr langsam während vier Tagen abgedampft.

Es wurde beachtet, dass die Arbeitsschritte bei der Herstellung der erfindungsgemässen Membranen und der entsprechenden Membranen zu Vergleichszwecken immer völlig gleich durchgeführt wurden.

Die erfindungsgemässen Membranen hatten eine bessere Haftung aus verschiedenen Substraten, wie zum Beispiel Substraten aus Siliziumdioxid enthaltenden Materialien, wie Glas oder Quarzglas, und auch aus Kunststoffen, wie beispielsweise Silikonharzen, als die entsprechenden Membranen zu Vergleichszwecken, die als Polymerkomponente das Polyvinylchloridhomopolymer enthielten.

Die Wasserabsorption der erfindungsgemässen Membranen betrug weniger als 10 Gew.-%, üblicherweise weniger als 8 Gew.-%, in manchen Fällen sogar weniger als 6 Gew.-%.

Beispiel 4

Konditionierung der erfindungsgemässen Membranen und der Membranen zu Vergleichszwecken

Die Membranen wurden in einer entsprechenden Vorrichtung so montiert, dass die beiden Membranseiten mit unterschiedlichen Lösungen in Berührung standen. Die eine der beiden Membranseiten wurde mit einer entsprechenden Elektrolytlösung in Berührung gebracht und die andere mit einer 7 Gew.-%igen Rinder-Serumalbuminlösung oder mit einer 6 Gew.-%igen menschlichen Serumalbuminlösung in einer 0,9 %igen physiologischen Kochsalzlösung in Berührung gebracht.

Das Rinder-Serumalbumin wurde von der Firma Fluka, CH 9470 Buchs, Schweiz, bezogen und die menschliche Serumalbuminlösung vom Schweizerischen Zentrallaboratorium für Bluttransfusionen, Organisation des Roten Kreuzes, Schweiz, bezogen.

Die Konditionierung der beiden Membranseiten erfolgte gleichzeitig während 24 Stunden. Nach der Konditionierung wurden beide Membranseiten mehrmals mit der Elektrolytlösung gewaschen, die später zur Bestimmung des Asymmetriepotentiales herangezogen wurde.

Beispiel 5

Elektrodensysteme, mit denen die Bestimmung des Asymmetriepotentiales vorgenommen wurde

Bei allen Bestimmungen des Asymmetriepotentiales von Membranen wurden Zellen des folgenden Typs verwendet:

Hg; $Hg_2Cl_2$ , KCl (ges.) | 0.1M KCl | Elektrolytlösung || Membran || Elektrolytlösung | 0.1M KCl | KCl (ges.), $Hg_2Cl_2$; Hg.

Bei der Testung der für Kaliumionen selektiven Membranen war die Elektrolytlösung eine 0,1 molare Lösung an Kaliumchlorid.

Bei der Testung der für Calciumionen selektiven Membranen war die Elektrolytlösung eine 0,1 molare Lösung von $CaCl_2$ und bei der Testung der natriumselektiven Membranen wurde als Elektrolytlösung eine 0,1 Lösung von Natriumchlorid verwendet.

Wesentlich bei der Bestimmung des Asymmetriepotentiales der Membranen ist der völlig symmetrische Aufbau der Testzelle.

Die erfindungsgemässen gegenüber Calciumionen selektiven Membranen und auch die entsprechenden Membranen zu Vergleichszwecken, deren Polymerkomponente das Polyvinylchlorid ohne hydrophile Gruppen war, waren elektrisch symmetrisch, nachdem beide Seiten der Membranen mit entsprechenden wässrigen Elektrolytlösungen während 24 Stunden oder 48 Stunden konditioniert worden waren. Die wässrigen Elektrolytlösungen waren in diesem Falle 0,1 molare Lösungen an Calciumchlorid.

Wurde dann in dem weiter vorne beschriebenen Konditionierungsversuch die eine Seite der calciumselektiven Membranen zu Vergleichszwecken mit einer 7 Gew.-%igen Rinder-Serumalbuminlösung in Berührung gebracht und die andere Seite der Membranen mit der 0,1-molaren Lösung an Calciumchlorid konditioniert, dann zeigten diese Membranen anfänglich ein Asymmetriepotential $E_{as}$ von über 5 mV, das dann allmählich auf einen Wert von knapp unter 2,5 mV absank.

Im Gegensatz dazu hatten die erfindungsgemässen calciumselektiven Membranen nach einer analogen Konditionierung auf der einen Seite mit dem Rinder-Serumalbumin, auf der anderen Seite mit der Calciumchloridlösung bereits zu Beginn der Messung ein Asymmetriepotential von 0 mV.

Analoge Ergebnisse wurden mit den beiden natriumselektiven Membranen zu Vergleichszwecken und den beiden erfindungsgemässen natriumselektiven Membranen erzielt. In diesem Fall war die Elektrolytlösung auf der einen Seite eine 0,1 molare Natriumchloridlösung.

Entsprechende Tests wurden auch mit den erfindungsgemässen kaliumselektiven Membranen und den entsprechenden Membranen zu Vergleichszwecken durchgeführt. Bei diesen Tests wurde die eine Seite der Valinomycin enthaltenden Membran mit einer 0,1-molaren Kaliumchloridlösung in Berührung gebracht.

Beispiel 6

Bestimmung der Natriumkonzentration unter Verwendung von Elektrolytlösungen und Serumproben

Zur Durchführung dieser Versuche wurden die im Beispiel 2 beschriebenen erfindungsgemässen natriumselektiven Membranen, beziehungsweise Membranen zu Vergleichszwecken verwendet, welche als ionenselektive Komponente das $N,N,N',N'$-Tetracyclohexyl-1,2-phenylen-dioxi-diacetamid enthielten.

Die EMK wurde mit der folgenden Zelle bestimmt:

Hg; $Hg_2Cl_2$, KCl (ges.) | 1 M LiOAc | Probelösung ‖ Membran ‖ Elektrodenfüllung, AgCl; Ag.

Die Elektrodenfüllung war eine 0,1 molare Kaliumchloridlösung und die ionenselektiven Membranen waren auf den Elektrodenkörper montiert. Die verwendete Referenzelektrode ist in der weiter oben zitierten Veröffentlichung von R.E. Dohner et al. in Analytical Chemistry, Ban 58,1986, Seiten 2585 und ff beschrieben.

Als Probelösungen wurden drei unterschiedliche wässrige Lösungen verwendet, und zwar die Lösungen $A_1$, $A_2$ und $A_3$.

Alle drei Lösungen waren wässrige Lösungen, die 4,0 mM an KCl, 1,1 mM an $CaCl_2$ und 0,6 mM an $MgCl_2$, sowie unterschiedliche Konzentrationen an NaCl enthielten. Die wässrige Lösung mit der Bezeichnung $A_1$ enthielt 50 mM Natriumchlorid, die wässrige Lösung mit der Bezeichnung $A_2$ 140 mM Natriumchlorid und die wässrige Lösung mit der Bezeichnung $A_3$ 400 mM Natriumchlorid.

Des weiteren wurden als Probelösungen drei Serumproben verwendet, und zwar die Proben $S_1$, $S_2$ und $S_3$. Diese drei Serumproben enthielten unterschiedliche Konzentrationen an Natriumionen.

Die Serumprobe mit der Bezeichnung $S_1$ enthielt 141 mM an $Na^+$, die Serumprobe mit der Bezeichnung $S_2$ 171 mM an $Na^+$ und die Serumprobe mit der Bezeichnung $S_3$ 211 mM an $Na^+$.

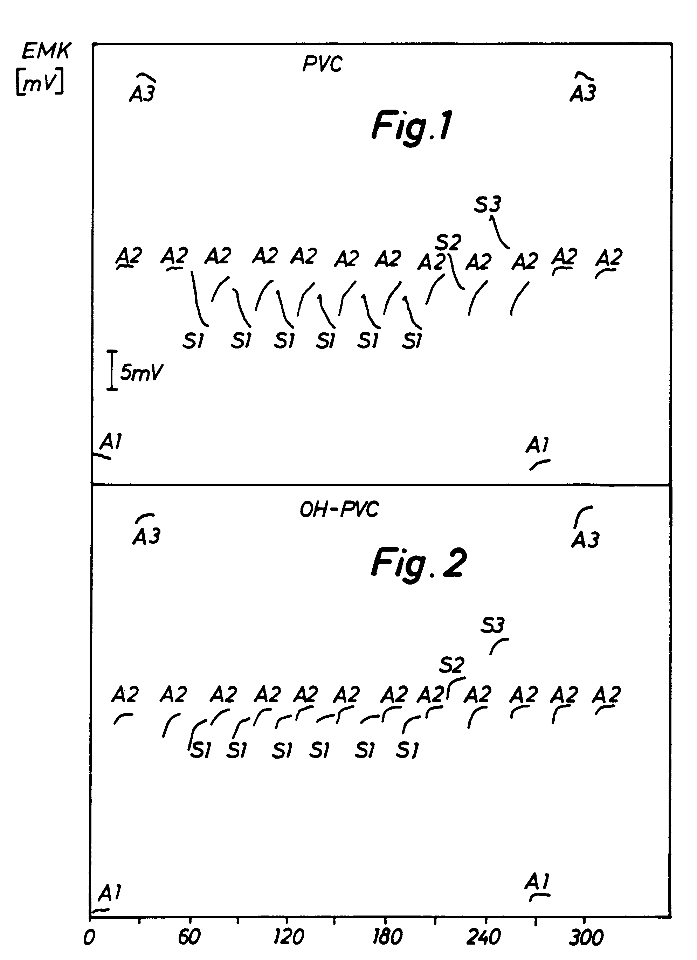

Mit der natriumselektiven Membran zu Vergleichszwecken und mit der erfindungsgemässen natriumselektiven Membran wurde zunächst die EMK bestimmt, wenn als Probelösung die wässrige Lösung $A_1$, beziehungsweise die wässrige Lösung $A_2$, beziehungsweise die wässrige Lösung $A_3$ verwendet wurde. Die entsprechenden Ergebnisse sind in Fig. 1 und Fig. 2 veranschaulicht.

In diesen Figuren ist auf der Ordinate die gemessene EMK in mV aufgetragen und auf der Abszisse die Zeit in Minuten.

In Fig. 1 sind die entsprechenden Messwerte veranschaulicht, die mit der Membran zu Vergleichszwecken erhalten wurden und in Fig. 2 die Messwerte, die mit der erfindungsgemässen Membran erhalten wurden. In beiden Figuren sind ganz links beim Zeitpunkt 0 und unmittelbar danach die entsprechenden EMK Werte für die wässrigen Probelösungen $A_1$, $A_2$ und $A_3$ angegeben. Anschliessend wurde in beiden Fällen nochmals die EMK mit der wässrigen Probelösung $A_2$ bestimmt und dann mehrmals alternierend die Serumprobe $S_1$, die wässrige Probe $A_2$ und wieder die Serumprobe $S_1$, usw. gemessen.

Aus der Fig. 1 sieht man sehr deutlich, dass bereits nach dem ersten Kontakt mit der Serumprobe $S_1$ eine erneute Messung der wässrigen Lösung $A_2$ einen deutlich tieferen Wert der EMK liefert als die entsprechende Messung vor dem ersten Kontakt mit der Serumprobe. Weitere Kontakte der Membran zu Vergleichszwecken mit der Serumprobe $S_1$ führen zu einem weiteren Absinken der EMK bei erneuten Bestimmungen der wässrigen Proben $A_2$.

Wie aus Fig. 2 ersichtlich ist, verändert sich bei einem analogen Vorgehen der gemessene Wert für die EMK der wässrigen Probe $A_2$ nicht, nachdem die Membran erstmalig mit der Serumprobe $S_1$ in Kontakt gebracht worden war. Auch wiederholte weitere Kontakte der erfindungsgemässen Membran mit der Serumprobe $S_1$ führen zu keinem Absinken der Messwerte bei den dazwischengeschalteten Messungen der wässrigen Probe $A_2$.

Man sieht also aus Fig. 1, dass die ionenselektiven Membranen zu Vergleichszwecken, in welchen die Polymerkomponente frei von hydrophilen Gruppen ist, nach mehrmaligen Kontakten mit der Serumprobe nach und nach immer tiefere Werte der gemessenen EMK lieferte. Im Gegensatz dazu zeigt Fig. 2, dass die entsprechenden Werte konstant waren, wenn die erfindungsgemässen natriumempfindlichen Membranen wiederholt mit den Serumproben in Kontakt gebracht worden waren.

Am Ende der Versuchsreihe wurde dann die Membran zu Vergleichszwecken und auch die erfindungsgemässe Membran noch mit der Serumprobe $S_2$ in Berührung gebracht, anschliessend wieder die wässrige Lösung $A_2$ gemessen und dann erfolgte ein Kontakt der Membran zu Vergleichszwecken, beziehungsweise der erfindungsgemässen Membran mit der Serumprobe $S_3$ schliesslich eine erneute Messung der wässrigen Lösung $A_2$ und anschliessend eine erneute Messung der EMK der drei wässrigen Lösungen $A_1$, $A_2$ und $A_3$.

Wie aus Fig. 1 ersichtlich ist, waren die Messwerte der Membran zu Vergleichszwecken nach dem Kontakt mit den Serumproben $S_2$ und $S_3$ verfälscht und erneute Messungen der EMK des wässrigen Proben $A_1$, $A_2$ und $A_3$ ergaben im Ver-

gleich zu den ursprünglichen Messungen verfälschte Werte.

Wie aus Fig. 2 ersichtlich ist, lieferte im Gegensatz dazu die erfindungsgemässe Membran auch nach dem Kontakt mit den Serumproben $S_2$ und $S_3$ bei einer erneuten Messung der wässrigen Lösung $A_2$ richtige Werte. Auch die am Abschluss der Versuchsserie durchgeführte erneute Messung der wässrigen Proben $A_1$, $A_2$ und $A_3$ ergab Werte für die EMK, die mit denjenigen am Beginn der Versuchsserie in guter Uebereinstimmung standen.

Die in Fig. 1 und Fig. 2 dargestellten Messergebnisse zeigen also sehr deutlich, dass die natriumselektive Membran zu Vergleichszwecken, deren Polymerkomponente Polyvinylchlorid war, bereits nach einem einmaligen Kontakt mit einer Serumprobe verfälschte Messwerte liefert, und zwar aufgrund eines nicht konstanten Standardpotentials und der Ausbildung eines Asymmetriepotentiales.

Im Gegensatz dazu zeigt die Fig. 2, dass die entsprechende erfindungsgemässe Membran, in welcher die Polymerkomponente ein Copolymerisat aus 87,7 Mol-% Vinylchlorid plus 12,3 Mol-% Vinylalkohol war, nach wiederholtem Kontakt mit unterschiedlichen Serumproben immer noch konstante Messwerte lieferte.

In einer analogen Messreihe wurde eine weitere natriumselektive Membran zu Vergleichszwekken getestet, welche als Polymerkomponente ein Copolymerisat aus Vinylchlorid plus Vinylalkohol enthielt, in dem jedoch der Vinylalkoholgehalt nur 3 Mol-% betrug. Diese Membran zu Vergleichszwekken mit einem zu geringen Gehalt an hydrophilen Gruppen lieferte eine ähnliche Verfälschung der Messwerte, wie die Membran zu Vergleichszwekken, deren Polymerkomponente reines Polyvinylchlorid war. Die Messergebnisse mit dieser zweiten Membran zu Vergleichszwecken waren also ähnlich denjenigen, die in Fig. 1 veranschaulicht sind.

Aus diesen Vergleichsversuchen sieht man also, dass mit ionenempfindlichen Teilen, in welchen die Polymerkomponente des Copolymerisates deutlich weniger als 5 Mol-% an Monomereinheiten aufweist, die hydrophile Gruppen tragen, die Vorteile der erfindungsgemässen ionenselektiven Teile nicht erreichbar sind.

Beispiel 7

In der gleichen Weise, wie dies im Beispiel 6 erläutert ist, wurde jetzt die in Beispiel 3 beschriebene calciumselektive Membran zu Vergleichszwecken und die in Beispiel 3 beschriebene erfindungsgemässe calciumselektive Membran getestet.

In dieser Testreihe wurden ebenfalls drei wässrige Lösungen $A_1$, $A_2$ und $A_3$ getestet, die 140 mM NaCl, 4,0 mM KCl und 0,6 mM an $MgCl_2$ enthielten

und unterschiedliche Gehalte an $CaCl_2$ aufwiesen.

Die wässrige Lösung mit der Bezeichnung $A_1$ enthielt 1 mM an $CaCl_2$, die wässrige Lösung mit der Bezeichnung $A_2$ 3 mM $CaCl_2$ und die wässrige Lösung mit der Bezeichnung $A_3$ 9 mM $CaCl_2$.

Auch hier wurden wiederum drei Serumproben $S_1$, $S_2$ und $S_3$ mit unterschiedlichen Calciumgehalten mit den calciumselektiven Membranen in Berührung gebracht.

Das Arbeitsverfahren wurde ansonsten identisch ausgeführt, wie das in Beispiel 6 beschriebene Verfahren, also die calciumselektiven Membranen zu Vergleichszwecken und die calciumselektiven erfindungsgemässen Membranen wurden zunächst zur Bestimmung der EMK der wässrigen Proben $A_1$, $A_2$ und $A_3$ verwendet.

Anschliessend wurden dann mit den Membranen zu Vergleichszwecken und mit den erfindungsgemässen Membranen alternierend die EMK dr wässrigen Probe $A_2$ und der Serumprobe $S_1$ bestimmt.

Auch in diesem Falle zeigte die entsprechende calciumselektive Membran zu Vergleichszwecken schon nach dem ersten Kontakt mit der Serumprobe eine deutlich geringere EMK bei der erneuten Messung der wässrigen Probe $A_2$ und der Messwert verschlechterte sich nach erneuten Kontakten mit der Serumprobe weiter. Die Ergebnisse waren also sehr ähnlich denjenigen der entsprechenden natriumselektiven Membran, die in Fig.1 veranschaulicht sind. Im Gegensatz dazu, wies die erfindungsgemässe calciumselektive Membran auch nach wiederholtem Kontakt mit der Serumprobe $S_1$ eine gute Konstanz der Messwerte auf. Die Ergebnisse sind also sehr ähnlich denjenigen, die in Fig. 2 für die erfindungsgemässe natriumselektive Membran dargestellt sind.

Auch in diesem Beispiel wurde am Ende der Versuchsreihe die calciumselektive Membran zu Vergleichszwecken und die erfindungsgemässe calciumselektive Membran mit den weiteren Serumlösungen $S_2$ und $S_3$ in Berührung gebracht. Auch hier führte dieser weitere Kontakt bei den Membranen zu Vergleichszwecken zu einem stärkeren Absenken der gemessenen EMK, während die entsprechenden Werte bei den erfindungsgemässen calciumselektiven Membranen konstant blieben.

Eine weitere Testreihe wurde mit entsprechenden kaliumempfindlichen Membranen zu Vergleichszwecken und kaliumempfindlichen erfindungsgemässen Membranen durchgeführt, in diesem Fall war die kaliumempfindliche Komponente der Membranen Valinomycin.

Die getesteten Membranen waren die entsprechenden kaliumselektiven Membranen, die in Beispiel 3 beschrieben sind.

Auch hier wurden drei wässrige Proben mit unterschiedlichen Gehalten an Kaliumionen und drei Serumproben mit unterschiedlichen Gehalten an Kaliumionen getestet.

Auch bei den kaliumempfindlichen Membranen zu Vergleichszwecken führte der erste Kontakt der Membranen mit der Serumprobe zu einem Absinken des gemessenen Wertes der EMK der entsprechenden wässrigen Lösung, während bei den erfindungsgemässen kaliumselektiven Membranen die gemessene EMK auch nach wiederholtem Kontakt mit den Serumproben konstant blieb.

## Patentansprüche

1. Ionenselektiver Teil von Vorrichtungen zur Bestimmung der Konzentration von Ionen in flüssigen Medien, der ein Polymermaterial, eine ionenselektive Komponente, welche eine Selektivität gegenüber den zu bestimmenden Ionen aufweist, und gegebenenfalls einen Weichmacher enthält, dadurch gekennzeichnet, dass das Polymermaterial ein Copolymeres ist, das Monomereinheiten aufweist, die von Alkenen oder Alkinen mit einer oder mehr Mehrfachbindungen stammen, wobei diese Alkene und Alkine gegebenenfalls einen oder mehrere Substituenten tragen, die Halogenatome, Arylreste, Carbonsäureestergruppen, Carbonsäureamidgruppen, Nitrilgruppen, Sulfonsäureestergruppen, Sulfonamidgruppen, Phosphonsäureestergruppen, Phosphonsäureamidgruppen, veresterte oder verätherte Hydroxylgruppen, Ketogruppen, freie oder acetalisierte Aldehydgruppen sind, und wobei in dem Copolymeren entweder keine Gruppen vorhanden sind, welche die Kohlenstoffhauptkette dieses Copolymeren unterbrechen oder in dem Copolymerisat Ethergruppen oder Polyethergruppierungen, Estergruppen oder Polyestergruppierungen, Urethangruppen oder Polyurethangruppierungen, Amidgruppen oder Polyamidgruppierungen, Carbonatgruppen oder Polycarbonatgruppierungen oder zwei oder mehr derartige Gruppen vorhanden sind, welche die Kohlenstoffhauptkette des Copolymeren unterbrechen, und wobei in dem Copolymerisat 5 - 25 Mol-% der Monomereinheiten des Copolymerisates ein oder mehrere hydrophile Substituenten tragen, die Hydroxylgruppen, Carboxylgruppen, Sulfonsäuregruppen, Phosphonsäuregruppen oder unterschiedliche der genannten hydrophilen Gruppen sind.

2. Ionenselektiver Teil gemäss Anspruch 1, dadurch gekennzeichnet, dass diejenigen Monomereinheiten des Copolymerisates, die keine hydrophilen Substituenten tragen, andere Monomereinheiten sind als diejenigen von unsubstituiertem Ethylen.

3. Ionenselektiver Teil nach Anspruch 2, dadurch gekennzeichnet, dass das in ihm enthaltene Polymermaterial ein Polyvinylhalogenidcopolymerisat oder ein Polyvinylidenhalogenidcopolymerisat, vorzugsweise ein entsprechendes Polymerisat, in welchem die Halogenatome Chloratome sind, ist, und 5 - 25 Mol-% der Monomereinheiten der Copolymerisate die genannten hydrophilen Substituenten tragen, und die Copolymerisate, gegebenenfalls noch weitere Substituenten enthalten, die Estergruppierungen, Säureamidgruppierungen, Nitrilgruppierungen, Carbonatgruppierungen und/oder Urethangruppierungen sind.

4. Ionenselektiver Teil gemäss Anspruch 3, dadurch gekennzeichnet, dass das Polymermaterial ein Copolymerisat aus Vinylchlorid und Vinylalkohol und/oder ungesättigten Monocarbonsäuren oder Polycarbonsäuren ist, wobei dieses Copolymerisat gegebenenfalls als weitere Substituenten Estergruppierungen enthält, insbesondere veresterte Hydroxylgruppen oder Carboxylgruppen, und wobei 7,0 - 18,2 Mol-%, vorzugsweise 10,9 - 13,8 Mol-% der Monomereinheiten des Copolymerisates von Vinylalkohol und/oder ungesättigten Monocarbonsäuren oder Polycarbonsäuren stammen.

5. Ionenselektiver Teil gemäss einem der Ansprüche 1 - 4, dadurch gekennzeichnet, dass er ein Weichmacher enthaltender ionenselektiver Teil ist, der 0,5 - 5 Gew.-% an der ionenselektiven Komponente, 30 - 50 Gew.-% an dem hydrophile Gruppen aufweisenden Copolymerisat und den Rest auf 100 Gew.-% an dem Weichmacher enthält.

6. Verfahren zur Herstellung des Copolymeren, das die Polymercomponente der ionenselektiven Teile gemäss einem der Ansprüche 1 - 5 darstellt, dadurch gekennzeichnet, dass man als Ausgangsmaterial zur Herstellung dieses Copolymerisates ein entsprechendes Homopolymerisat oder Copolymerisat verwendet, in welchem die Hydroxylgruppen in veresterter Form, Carboxylgruppen, Sulfonsäuregruppen und/oder Phosphonsäuregruppen in veresterter Form, in Form von Säureamiden oder als Nitril vorliegen, und dass man dieses Ausgangsmaterial einer Verseifung unterwirft, durch die die entsprechenden Hydroxylgruppen, Carboxylgruppen, Phosphonsäuregruppen, bzw. Sulfonsäuregruppen freigesetzt werden und die Verseifung so lange durchführt, bis in dem Copolymerisat der Anteil an Monomereinheiten, die ein oder mehr hydrophile Substituenten aufweisen, welche Hydroxylgruppen, Carboxylgruppen, Sulfonsäuregruppen, Phosphonsäuregruppen oder unterschiedliche der genannten Gruppen sind, 5 - 25 Mol-% beträgt.

7. Verfahren nach Anspruch 6, dadurch gekennzeichnet, dass man ein Polyvinylhalogenidcopolymerisat, vorzugsweise ein Polyvinylchloridcopolymerisat, oder ein Polyvinylidenhalogenidcopolymerisat herstellt, wobei in dem Copolymerisat 5 - 25 Mol-% insbesondere 7,0 - 18,2 Mol % der Monomereinheiten ein oder mehrere hydrophile Substituenten tragen, die Hydroxylgruppen, Carboxylgruppen, Sulfonsäuregruppen, Phosphonsäuregruppen oder unterschiedliche der genannten hydrophilen Gruppen sind, indem man aus einem Polyvinylhalogenidcopolymerisat, beziehungsweise Polyvinylidenhalogenidcopolymerisat, in welchem die Hydroxylgruppen in veresterter Form und die Carboxylgruppen, Sulfonsäuregruppen und/oder Phosphonsäuregruppen, in veresterter Form oder in Form von Säureamiden vorliegen, die entsprechenden Hydroxylgruppen, Carboxylgruppen, Sulfonsäuregruppen, beziehungsweise Phosphonsäuregruppen, durch Verseifung freisetzt, bis in dem Copolymerisat, der Anteil an Monomereinheiten, mit den genannten hydrophilen Substituenten in dem angegebenen Bereich liegt.

8. Verfahren nach Anspruch 7, dadurch gekennzeichnet, dass man ein Copolymerisat aus Vinylchlorid und Vinylalkohol oder ein Copolymerisat aus Vinylchlorid, Vinylalkohol und Vinylacetat herstellt, wobei in dem Copolymerisat 7,0 - 18,2 Mol-% der Monomereinheiten, vorzugsweise 10,9 - 13,8 Mol-% der Monomereinheiten, von Vinylalkohol stammen, indem man als Ausgangsmaterial ein Copolymerisat aus Vinylchlorid und Vinylacetat verwendet, in welchem mindestens 7,0 Mol-% der Monomereinheiten von Vinylacetat stammen und dieses Ausgangsmaterial einer Verseifung unterwirft, wodurch die Acetatgruppen abgespalten und die Hydroxygruppen freigesetzt werden, und wobei diese Verseifungsreaktion bis zur Erreichung eines Vinylalkoholgehaltes in dem Copolymerisat in den angegebenen Bereichen durchgeführt wird.

9. Verwendung des ionenselektiven Teiles gemäss einem der Ansprüche 1 bis 5 in einer Vorrichtung zur Bestimmung der Konzentrationen eines oder mehrerer Ionen, dadurch gekennzeichnet, dass der ionenselektive Teil in Form einer ionenselektiven Beschichtung von Halbleitern oder Leitern oder in Form von ionenselektiven Membranen, beispielsweise Membranen ionenselektiver Elektroden, vorliegt oder dass der ionenselektive Teil ein Teil eines kleinen, mehrere Ionen testenden Systems ist, wobei in diesem miniaturisierten System ionenselektive Bereiche, die für unterschiedliche Arten von Ionen empfindlich sind, in naher Umgebung zueinander angeordnet sind.

10. Verwendung des ionenselektiven Teiles gemäss Anspruch 9, dadurch gekennzeichnet, dass der Teil in einer Vorrichtung zur Bestimmung der entsprechenden Ionen in flüssigen Medien eingesetzt wird, die als weitere Komponenten organische Stoffe und insbesondere hochmolekulare organische Stoffe mit hydrophilen Gruppen, beispielsweise Proteine, enthalten, und dass der ionenselektive Teil nach dem Kontakt mit derartigen Messproben eine gute Konstanz des Standardpotentials und praktisch kein Asymmetriepotential aufweist.

11. Verwendung nach Anspruch 9 oder 10, dadurch gekennzeichnet, dass der ionenselektive Teil in einer Vorrichtung zur Bestimmung der Konzentrationen von Ionen in Körperflüssigkeiten eingesetzt wird, insbesondere in einer klinischen Vorrichtung zur Bestimmung der Ionenkonzentrationen im Gesamtblut, Blutserum oder Blutplasma.

**Claims**

1. Ion-selective part of devices for determining the concentration of ions in fluid media, which contains a polymer material, an ion-selective component exhibiting selectivity with respect to the ions to be determined, and in certain cases a plasticizer, characterised in that the polymer material is a copolymer comprising monomer units which originate from alkenes or alkynes with one or more multiple bonds, where these alkenes and alkynes bear in certain cases one or more substituents which are halogen atoms, aryl residues, carboxylic acid ester groups, carboxylic acid amide groups, nitrile groups, sulphonic acid ester groups, sulphonamide groups, phosphonic acid ester groups, phosphonic acid amide groups, esterified or etherified hydroxyl groups, keto groups, free or acetalated aldehyde groups, and where either there are in the copolymer no groups which interrupt the main carbon chain of this copolymer or there are in the copolymer ether groups or polyether groupings, ester groups or polyester groupings, urethane groups or polyurethane groupings, amide groups or polyamide groupings, carbonate groups or polycarbonate groupings or two or more such groups which interrupt the main carbon chain of the copolymer, and where in the copolymer 5 - 25 mole % of the monomer units of the copolymer bear one or more hydrophilic substituents which are hydroxyl groups, carboxyl groups, sulphonic acid groups, phosphonic acid groups or various of the named hydrophilic groups.

2. Ion-selective part according to claim 1, characterised in that those monomer units of the copolymer which bear no hydrophilic substituents are monomer units other than those of non-substituted ethylene.

3. Ion-selective part according to claim 2, characterised in that the polymer material contained in it is a polyvinyl halide copolymer or a polyvinylidene halide copolymer, preferably a corresponding polymer in which the halogen atoms are chlorine atoms, and 5 - 25 mole % of the monomer units of the copolymers bear the mentioned hydrophilic substituents, and the copolymers in certain cases contain still further substituents, which are ester groupings, acid amide groupings, nitrile groupings, carbonate groupings and/or urethane groupings.

4. Ion-selective part according to claim 3, characterised in that the polymer material is a copolymer of vinyl chloride and vinyl alcohol and/or unsaturated monocarboxylic acids or polycarboxylic acids, where this copolymer in certain cases contains as further substituents ester groupings, in particular esterified hydroxyl groups or carboxyl groups, and where 7.0 - 18.2 mole %, preferably 10.9 - 13.8 mole %, of the monomer units of the copolymer originate from vinyl alcohol and/or unsaturated monocarboxylic acids or polycarboxylic acids.

5. Ion-selective part according to any one of claims 1 - 4, characterised in that it is a plasticizer-containing ion-selective part which contains
0.5 - 5% by wt of the ion-selective component, 30 - 50% by wt of the copolymer comprising hydrophilic groups and the balance to 100% by wt of the plasticizer.

6. Method for manufacturing the copolymer which represents the polymer component of the ion-selective parts according to any one of claims 1 - 5, characterised in that there is used as starting material for the manufacture of this copolymer a corresponding homopolymer or copolymer in which the hydroxyl groups are present in esterified form, carboxyl groups, sulphonic acid groups and/or phosphonic acid groups in esterified form, in the form of acid amides or as nitrile, and that this starting material is subjected to saponification, as a result of which the corresponding hydroxyl groups, carboxyl groups, phosphonic acid groups or sulphonic acid groups are liberated and the saponification is carried out until in the copolymer the proportion of monomer units which comprise one or more hydrophilic substituents which are hydroxyl groups, carboxyl groups, sulphonic acid groups, phosphonic acid groups or various of the mentioned groups comes to 5 - 25 mole %.

7. Method according to claim 6, characterised in that a polyvinyl halide copolymer, preferably a polyvinyl chloride copolymer, or a polyvinylidene halide copolymer is manufactured, where in the copolymer 5 - 25 mole %, in particular 7.0 - 18.2 mole %, of the monomer units bear one or more hydrophilic substituents which are hydroxyl groups, carboxyl groups, sulphonic acid groups, phosphonic acid groups or various of the mentioned hydrophilic groups, by liberating by saponification out of a polyvinyl halide copolymer, or alternatively polyvinylidene halide copolymer, the hydroxyl groups being present in esterified form and the carboxyl groups, sulphonic acid groups and/or phosphonic acid groups in esterified form or in the form of acid amides, the corresponding hydroxyl groups, carboxyl groups, sulphonic acid groups, or alternatively phosphonic acid groups, until in the copolymer the proportion of monomer units with the mentioned hydrophilic substituents lies in the quoted range.

8. Method according to claim 7, characterised in that a copolymer of vinyl chloride and vinyl alcohol or a copolymer of vinyl chloride, vinyl alcohol and vinyl acetate is manufactured, where in the copolymer 7.0 - 18.2 mole % of the monomer units, preferably 10.9 - 13.8 mole % of the monomer units, originate from vinyl alcohol, by using as starting material a copolymer of vinyl chloride and vinyl acetate in which at least 7.0 mole % of the monomer units originate from vinyl acetate and this starting material is subjected to saponification, as a result of which the acetate groups are split off and the hydroxyl groups liberated, and where this saponification reaction is carried out until a vinyl alcohol content in the copolymer within the quoted ranges is obtained.

9. Use of the ion-selective part according to any one of claims 1 to 5 in a device for determining the concentration of one or more ions, characterised in that the ion-selective part is present in the form of an ion-selective coating of semi-conductors or conductors or in the form of ion-selective membranes, for example membranes of ion-selective electrodes, or that the ion-selective part is part of a small system testing a plurality of ions, where in this miniaturized system ion-selective areas which are sensitive to different kinds of ions are disposed in the immediate vicinity of one another.

10. Use of the ion-selective part according to claim 9, characterised in that the part is used in a device for determining the corresponding ions in fluid media which contain as further components organic substances and in particular high-molecular-weight organic substances with hydrophilic groups, for example proteins, and that the ion-selective part exhibits after contact with such measurement samples good constancy of the standard potential and practically no asymmetry potential.

11. Use according to claim 9 or 10, characterised in that the ion-selective part is used in a device for determining the concentration of ions in body fluids, in particular in a clinical device for determining the ion concentrations in whole blood, blood serum or blood plasma.

**Revendications**

1. Partie sélective pour les ions de dispositifs pour déterminer la concentration des ions dans les milieux liquides, qui contient un matériau polymère, un composant sélectif pour les ions qui présente une sélectivité par rapport aux ions à déterminer et, éventuellement, un plastifiant, caractérisée en ce que le matériau polymère est un copolymère qui présente des unités monomères provenant d'alcènes ou d'alcynes avec une ou plusieurs liaison(s) multiple(s), tandis que ces alcènes et alcynes portent éventuellement un ou plusieurs substituant(s) qui sont des atomes d'halogènes, des radicaux aryle , des groupes d'ester carboxylique , des groupes d'amide carboxylique , des groupes nitrile , des groupes d'ester sulfonique , des groupes d'amide sulfonique , des groupes d'ester phosphonique , des groupes d'amide phosphonique , des groupes hydroxyle estérifiés ou éthérifiés, des groupes cétone , des groupes aldéhyde libres ou acétalisés et où il n'existe pas, dans le copolymère, des groupes qui interrompent la chaîne principale des atomes de carbone de ce copolymère, ou bien qu'il existe dans le copolymère des groupes éther ou des groupements polyéther , des groupes ester ou des groupements polyester , des groupes uréthane ou des groupements polyuréthane , des groupes amide ou des groupements polyamide , des groupes carbonate ou des groupements polycarbonate ou deux ou plusieurs de ces groupes qui interrompent la chaîne principale des atomes de carbone du copolymère et où, dans le copolymère, 5 à 25 moles-% d'unités monomères du copolymère portent un ou plusieurs substituant(s) hydrophile(s) qui sont des groupes hydroxyle , des groupes carboxyle , des groupes sulfoniques, des groupes phosphoniques ou des groupes hydrophiles précités ou différents.

2. Partie sélective pour les ions selon la revendication 1, caractérisée en ce que les unités monomères du copolymère qui ne portent pas de substituants hydrophiles sont d'autres unités monomères que celles de l'éthylène non substitué.

3. Partie sélective pour les ions selon la revendication 2, caractérisée en ce que le matériau polymère contenu dans celle-ci est un copolymère d'halogénure de polyvinyle ou un copolymère d'halogénure de polyvinylidène et, de préférence, un polymère de ce genre dans lequel les atomes d'halogène sont des atomes de chlore et où 5 à 25 moles-% des unités monomères des copolymères portent les substituants hydrophiles précités et qu'il existe éventuellemnt encore également dans les copolymères des groupements ester , des groupements d'amide d'acide , des groupements nitrile , des groupements carbonate et/ou des groupements uréthane .

4. Partie sélective pour les ions selon la revendication 3, caractérisée en ce que le matériau polymère est un copolymère de chlorure de vinyle et d'alcool vinylique et/ou d'acide monocarboxylique ou d'acide polycarboxylique insaturés tandis que ce copolymère contient également, en outre, des groupements ester et, en particulier, des groupes hydroxyle estérifiés ou des groupes carboxyle et où 7 à 18,2 moles-% et, de préférence, 10,9 à 13,8 moles-% des unités monomères du copolymère proviennent de l'alcool vinylique et/ou d'acides monocarboxyliques ou d'acides polycarboxyliques insaturés.

5. Partie sélective pour les ions selon l'une des revendications 1 à 4, caractérisée en ce que cette partie sélective pour les ions contenant un plastifiant est composée de

0,5 à 5%
en poids des composants sélectifs pour les ions,
30 à 50%
en poids du copolymère présentant des groupes hydrophiles, et
le reste à 100% en poids de plastifiant.

6. Procédé de production du copolymère constituant le composant polymère de la partie sélective pour les ions selon l'une des revendications 1 à 5, caractérisé en ce qu'on utilise comme matière première pour la production de ce copolymère un homopolymère correspondant ou un copolymère dans lequel les groupes hydroxyle se présentent sous forme d'esters, les groupes carboxyle, les groupes d'acide sulfonique et/ou les groupes d'acide phosphonique sous forme d'esters, sous forme d'amides d'acides ou sous forme de nitriles, et en ce qu'on soumet cette matière première à une saponification par laquelle les groupes hydroxyle, les groupes carboxyle, les groupes d'acide phosphonique ou les groupes d'acide sulfonique sont libérés et en ce qu'on effectue la saponification jusqu'à ce que la fraction d'unités monomères présentant un ou plusieurs substituants hydrophiles qui sont des groupes hydroxyle, des groupes carboxyle, des groupes d'acide sulfonique , des groupes d'acide phosphonique ou des groupes différents des groupes précités dans le copolymère, soit de 5 à 25 moles-%.

7. Procédé selon la revendication 6, caractérisé en ce qu'on prépare un copolymère d'halogénure de polyvinyle, et de préférence un copolymère de chlorure de polyvinyle ou un copolymère d'halogénure de polyvinylidène dans lequel, dans le copolymère, 5 à 25 moles-% des unités monomères et en particulier 7 à 18,2 moles-% de celles-ci comportent un ou plusieurs substituants hydrophiles qui sont des groupes hydroxyle, des groupes carboxyle, des groupes d'acide sulfonique , des groupes d'acide phosphonique ou des groupes différents des groupes hydrophiles précités, en libérant par saponification du copolymère d'halogénure de polyvinyle ou du copolymère d'halogénure de polyvinylidène dans lequel les groupes hydroxyle se présentent sous forme d'esters et les groupes carboxyle, les groupes d'acide sulfonique et/ou les groupes d'acide phosphonique sous forme d'esters ou sous formes d'amides d'acides, les groupes hydroxyle correspondants , les groupes carboxyle, les groupes d'acide sulfonique ou les groupes d'acide phosphonique jusqu'à ce que la fraction d'unités monomères avec les substituants hydrophiles précités soit située dans la gamme précitée dans le copolymère.

8. Procédé selon la revendication 7, caractérisé en ce qu'on prépare un copolymère de chlorure de vinyle et d'alcool vinylique ou un copolymère de chlorure de vinyle ou d'alcool vinylique et d'acétate de vinyle dans lequel dans le copolymère, 7 à 18,2 moles-% des unités monomères et de préférence 10,9 à 13,8 moles-% des unités monomères proviennent de l'alcool vinylique,en utilisant comme matière première un copolymère de chlorure de vinyle et d'acétate de vinyle dans lequel au moins 7,0 moles-% des unités monomères proviennent de l'acétate de vinyle et qu'on soumet cette matière première à une saponification qui sépare les groupes acétate et qui libère les groupes hydroxyle, et en ce qu'on continue cette réaction de saponification jusqu'à ce qu'on atteigne une teneur en alcool vinylique dans le copolymère comprise dans la gamme précitée.

9. Utilisation de la partie sélective pour les ions selon l'une des revendications 1 à 5 dans un dispositif pour déterminer les concentrations dans plusieurs ions, caractérisée en ce que la partie sélective pour les ions se présente sous forme d'un enduit sélectif pour les ions de semi-conducteurs ou de conducteurs ou sous forme de membranes sélectives pour les ions et, par exemple, de membranes d'électrodes sélectives pour les ions ou en ce que la partie sélective pour les ions est une partie d'un petit système pour tester plusieurs ions, dans lequel ce système miniaturisé contient des domaines sélectifs pour les ions sensibles aux différents types d'ions et disposés à proximité immédiate les uns des autres.

10. Utilisation de la partie sélective pour les ions selon la revendication 9, caractérisée en ce qu'on utilise la partie d'un dispositif pour la détermination des ions correspondants dans des milieux liquides contenant comme autres composants des matières organiques, et en particulier des matières organiques à poids moléculaire élevé avec des groupes hydrophiles comme par exemple des protéines, et en ce que la partie sélective pour les ions présente, après le contact avec des sondes de mesure de ce genre, une bonne constance du potentiel standard et pratiquement aucun potentiel d'asymétrie.

11. Utilisation selon la revendication 9 ou 10, caractérisée en ce que la partie sélective pour les ions est utilisée dans un dispositif pour la détermination des concentrations des ions dans les liquides physiologiques, et en particulier dans un dispositif clinique pour la détermination des concentrations ioniques dans le sang complet, le sérum sanguin ou le plasma sanguin.

Fig.1

Fig.2